# EUROPEAN PATENT APPLICATION

(11) **EP 2 456 211 A2**
(43) Date of publication of application: **23.05.2012**
(21) Application number: 11188808.7
(22) Date of filing: 11.11.2011
(51) Int. Cl.: H04N 13/00

(54) **3D display device and 3D display method**

(30) Priority: 22.11.2010 JP 2010260074
(71) Applicant: Sony Corporation, Tokyo 108-0075 (JP)
(72) Inventor: Sato, Yoshihisa, Minato-ku, Tokyo 108-0075 (JP); Okamoto, Yoshiki, Minato-ku, Tokyo 108-0075 (JP); Yoshida, Tetsuyuki, Minato-ku, Tokyo 108-0075 (JP); Chiba, Atsuhiro, Minato-ku, Tokyo 108-0075 (JP); Sakamoto, Sho, Minato-ku, Tokyo 108-0075 (JP)
(74) Representative: Lewis, Darren John

(57) **Abstract**

A display device includes: an optical barrier unit which includes a plurality of gate groups each including a plurality of gates, and in which gates in different groups perform a gating operation individually at different timings; a combined image generator which generates a plurality of sequences of combined images each corresponding to the plurality of gate groups based on a plurality of different viewpoint images in accordance with an opening timing of the respective gate groups; and a display unit which displays the corresponding sequence of combined images in synchronization with the gating operation of the respective gate groups, wherein the combined image generator generates at least one sequence of combined images through interpolation.

## Description

The present disclosure relates to a parallax barrier 3D display device and method capable of performing 3D display.

In recent years, display devices (3D display devices) capable of realizing 3D display have been gathering attention. 3D displays display left and right-eye video images with parallax (different viewpoints), thus enabling viewers to recognize them as stereo video images with a sense of depth when the left and right eyes of the viewers see each video image. Moreover, display devices capable of presenting more natural 3D video images to viewers by displaying three or more video images with parallax are also being developed.

Such 3D display devices are broadly classified into devices requiring dedicated glasses and devices which do not. For viewers dedicated glasses feel uncomfortable, and thus, devices which do not require dedicated glasses are desirable. Examples of display devices which do not require dedicated glasses include lenticular lens display devices, parallax barrier display devices, and the like. These display devices display a plurality of video images (viewpoint video images) with parallax simultaneously so that video images appear to be different depending on a relative positional relationship (angle) between a display device and a viewer. When a plurality of viewpoint video images are displayed with such a display device, the real resolution of the video images becomes a division of the resolution of a display device itself such as a cathode ray tube (CRT) or a liquid crystal display device by the number of viewpoints. Thus, image quality may decrease.

Various studies have been undertaken in order to solve this problem. For example, JP-A-2009-104105 discloses a parallax barrier display device which displays video images by changing the transmission state (open state) and the blocking state (closed state) of each of a plurality of barriers disposed within a display surface in a time-divided manner to thereby improve an equivalent resolution. When a video signal having a refresh rate of 60 Hz is supplied, for example, this display device generates two images of which the display positions are shifted relative to each other every 17 ms (=1/60 Hz) based on the respective images of the video signal, and opens and closes the barriers in accordance with the display positions, to thereby improve the resolution.

On the other hand, a frame rate conversion technique using frame interpolation is known as a video signal processing technique for improving the image quality of video display devices. The frame rate conversion technique is a technique of interpolating frames adjacent to an input video image to generate an interpolated frame and inserting the interpolated frame into the input video image. A video display device using this technique is disclosed, for example, in JP-A-2010-056694 and JP-A-2007-074588, and on the Internet website of Sony Corporation (URL: http://www.sony.jp/bravia/technology/mf240/index.html, searched on October 1, 2010, titled "Motionflow 120Hz 2X rate LCD and Motionflow 240Hz 4X rate LCD"). This technique enables video images to be displayed more smoothly and reduces so-called motion blur resulting from the fact that in the case of liquid crystal display devices, for example, pixel states are maintained for one frame period, whereby the image quality is improved.

However, in a 3D display device, it is also desirable to improve the image quality by realizing smoother video images, for example. However, JP-A-2009-104105 makes no description relating to the image quality improvement. Moreover, JP-A-2010-056694, JP-A-2007-074588, and the Internet website of Sony Corporation (URL: http://www.sony.jp/bravia/technology/mf240/index.html) make no description relating to 3D display devices.

Therefore, it is desirable to provide a 3D display device and method capable of increasing image quality.

Various respective aspects and features of the invention are defined in the appended claims. Combinations of features from the dependent claims may be combined with features of the independent claims as appropriate and not merely as explicitly set out in the claims.

A 3D display device according to one embodiment of the present disclosure includes an optical barrier unit, a combined image generator, and display unit. The optical barrier unit includes a plurality of gate groups each including a plurality of gates, and gates in different groups perform a gating operation individually at different timings. The combined image generator generates a plurality of sequences of combined images each corresponding to the plurality of gate groups based on a plurality of different viewpoint images in accordance with an opening timing of the respective gate groups. The display unit displays the corresponding sequence of combined images in synchronization with the gating operation of the respective gate groups. The combined image generator generates at least one sequence of combined images through interpolation.

A 3D display device according to another embodiment of the present disclosure includes an optical barrier unit and a display unit. The optical barrier unit includes a plurality of gate groups each including a plurality of gates, and gates in different groups perform a gating operation individually at different timings. The display unit displays a plurality of sequences of combined images each corresponding to the plurality of gate groups. At least one sequence of combined images among the plurality of sequences of combined images is generated through interpolation, and the optical barrier unit performs the gating operation in synchronization with the combined images.

A 3D display method according to still another embodiment of the present disclosure includes causing a plurality of gates of an optical barrier to perform a gating operation by switching in units of gate groups in a time-divided manner; generating a plurality of sequences of combined images each corresponding to the plurality of gate groups based on each of a plurality of different viewpoint images in accordance with an opening timing of the respective gate groups; and displaying the corresponding sequence of combined images in synchronization with the gating operation of the respective gate groups.

In the 3D display device of the one and another embodiments and the 3D display method of the still another embodiment of the present disclosure, the combined images generated in correspondence to the respective gate groups are displayed by the gating operation of the gates in accordance with the opening timing of the respective gate groups so that the combined images are recognized as stereo images. In this way, the corresponding combined images are displayed when the respective gates are in the open state and perform the opening operation.

In the 3D display device of the one embodiment of the present disclosure, for example, the display unit may perform display through line-sequential scanning, and the plurality of gates may be provided so that each gate extends in the direction of the line-sequential scanning, and may be arranged so that the respective gate groups appear in a circular manner in the direction crossing the line-sequential scanning direction. Moreover, for example, the gates of the optical barrier unit may perform the gating operation by switching in units of the gate groups in a time-divided manner, and the display unit may display corresponding combined images at positions corresponding to the gates which are in an open state.

Furthermore, for example, the display unit may perform display through line-sequential scanning, the optical barrier unit may be divided into a plurality of sub-barrier regions in the direction of the line-sequential scanning and may include the plurality of gate groups in each of the sub-barrier regions, and the combined image generator may generate the combined images in each of the regions corresponding to the sub-barrier regions in accordance with an opening timing of the respective gate groups.

Furthermore, for example, a sequence of combined images among the plurality of sequences of combined images may be generated by directly combining the plurality of viewpoint images.

Furthermore, for example, the display unit may be a liquid crystal display unit, and the display device may further include a backlight. In this case, for example, the liquid crystal display unit may be disposed between the backlight and the optical barrier unit, and the optical barrier unit may be disposed between the backlight and the liquid crystal display unit.

According to the 3D display device of the one and another embodiments and the 3D display method of the still another embodiment of the present disclosure, since the combined images corresponding to the respective gate groups are generated in accordance with the opening timing of the respective gate groups, it is possible to realize smoother video images and to increase image quality.

Embodiments of the invention will now be described with reference to the accompanying drawings, throughout which like parts are referred to by like references, and in which:
Fig. 1 is a block diagram showing a configuration example of a 3D display device according to an embodiment of the present disclosure.
Figs. 2A and 2B are diagrams illustrating a configuration example of a 3D display device according to a first embodiment of the present disclosure.
Figs. 3A and 3B are schematic diagrams showing an operation example of an interpolation process in an interpolation processor according to the first embodiment.
Fig. 4 is a block diagram showing a configuration example of a display driver and a display unit according to the first embodiment.
Fig. 5 is a diagram illustrating a configuration example of the display unit according to the first embodiment.
Fig. 6 is a circuit diagram showing a configuration example of a pixel according to the first embodiment.
Figs. 7A and 7B are diagrams illustrating a configuration example of a liquid crystal barrier according to the first embodiment.
Fig. 8 is a schematic diagram showing an operation example of the liquid crystal barrier performing 3D display according to the first embodiment.
Figs. 9A to 9C are schematic diagrams showing an operation example of the display unit and the liquid crystal barrier according to the first embodiment.
Fig. 10 is a diagram illustrating frame images according to the first embodiment.
Figs. 11A and 11B are diagrams illustrating combined frame images according to the first embodiment.
Figs. 12A and 12B are other schematic diagrams showing an operation example of the display unit and the liquid crystal barrier according to the first embodiment.
Figs. 13A and 13B are other schematic diagrams showing an operation example of the display unit and the liquid crystal barrier according to the first embodiment.
Figs. 14A to 14C are timing diagrams showing an operation example of the 3D display device according to the first embodiment.
Figs. 15A to 15C are schematic diagrams showing an operation example of the 3D display device according to the first embodiment.
Figs. 16A to 16D are timing diagrams showing an operation example of the 3D display device according to a modified example of the first embodiment.
Fig. 17 is a diagram illustrating a configuration example of a liquid crystal barrier according to a second embodiment of the present disclosure.
Fig. 18 is a schematic diagram showing an operation example of the liquid crystal barrier performing 3D display according to the second embodiment.
Fig. 19 is a diagram illustrating the zones of a display unit according to the second embodiment.
Figs. 20A to 20C are timing diagrams showing an operation example of the 3D display device according to the second embodiment.
Figs. 21A to 21C are schematic diagrams showing an operation example of the 3D display device according to the second embodiment.
Figs. 22A and 22B are diagrams illustrating a configuration example of backlights according to a modified example of the second embodiment.
Figs. 23A to 23D are timing diagrams showing an operation example of the 3D display device according to the modified example of the second embodiment.
Figs. 24A to 24C are timing diagrams showing an operation example of the 3D display device according to the modified example.
Figs. 25A to 25C are schematic diagrams showing an operation example of the 3D display device according to the modified example.
Fig. 26A and 26B are diagrams illustrating a configuration example of the 3D display device according to another modified example.
Figs. 27A and 27B are schematic diagrams showing an operation example of the 3D display device according to the other modified example.
Figs. 28A and 28B are plan views showing a configuration example of a liquid crystal barrier according to the other modified example.
Figs. 29A to 29C are schematic diagrams showing an operation example of a display unit and a liquid crystal barrier according to the other modified example.

Hereinafter, embodiments of the present disclosure will be described. The description will be given in the following order:
1. First Embodiment
2. Second Embodiment

### <1. First Embodiment>

### [Configuration Example]

### (Overall Configuration Example)

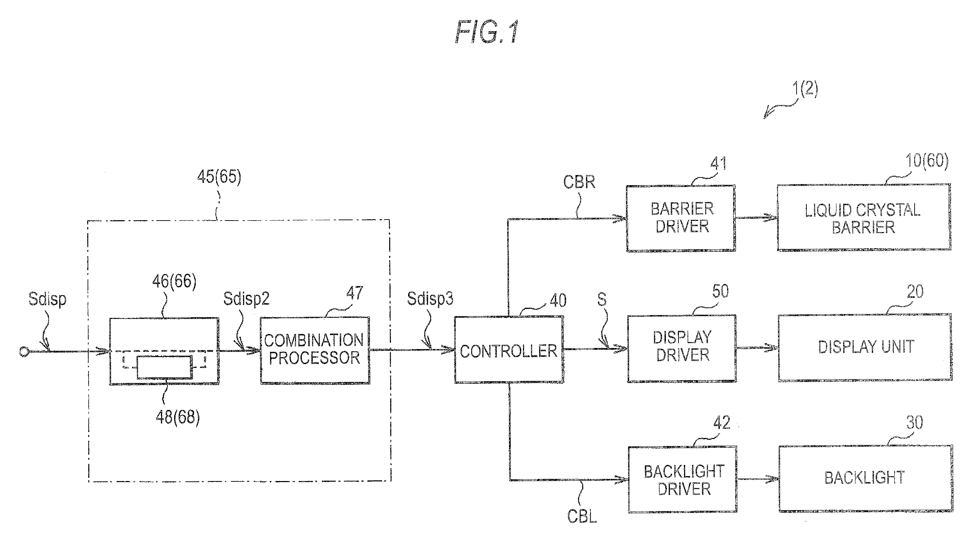

Fig. 1 shows a configuration example of a 3D display device according to an embodiment of the present disclosure. The 3D display method according to the embodiment of the present disclosure is implemented by the present embodiment, and will be described herein. The 3D display device 1 includes a combined image generator 45, a controller 40, a display driver 50, a display unit 20, a backlight driver 42, a backlight 30, a barrier driver 41, and a liquid crystal barrier 10.

The combined image generator 45 generates a video signal Sdisp3 based on a video signal Sdisp supplied from the outside. The combined image generator 45 includes an interpolation processor 46 including an interpolated image generator 48 and a combination processor 47. As will be described later, the interpolation processor 46 has a function of performing a time-series interpolation process on each of a plurality of (in this example, six) viewpoint video images included in the video signal Sdisp when the 3D display device 1 displays 3D video images to thereby generate a video signal Sdisp2. As will be described later, the combination processor 47 performs a combination process on the respective viewpoint video images based on the video signal Sdisp2 to generate a video signal Sdisp3 composed of a video signal SA including a combined frame image FA and a video signal SB including a combined frame image FB.

The controller 40 is a circuit that controls the display driver 50, the backlight driver 42, and the barrier driver 41 so as to operate in a synchronized manner based on the video signal Sdisp3. Specifically, as will be described later, the controller 40 controls these drivers by supplying the video signals SA and SB to the display driver 50, a backlight control signal C3L to the backlight driver 42, and a barrier control signal CBR to the barrier driver 41 based on the video signal Sdisp3 when the 3D display device 1 displays 3D video images.

The display driver 50 drives the display unit 20 based on the video signal S supplied from the controller 40. The display unit 20 performs display by line-sequential scanning, and in this example, drives liquid crystal display elements to modulate light emitted from the backlight 30 to thereby perform display.

The backlight driver 42 drives the backlight 30 based on the backlight control signal CBL supplied from the controller 40. The backlight 30 emits a field of light to the display unit 20. The backlight 30 can be formed using light emitting diodes (LEDs), for example. The backlight 30 is not limited to this, but can be formed using a cold cathode fluorescent lamp (CCFL), for example.

The barrier driver 41 drives the liquid crystal barrier 10 based on the barrier control signal CBR supplied from the controller 40. The liquid crystal barrier 10 includes a plurality of gates 11 and 12 (described later) which are formed of liquid crystal and has a function of transmitting or blocking light which has been emitted from the backlight 30 and passed through the display unit 20.

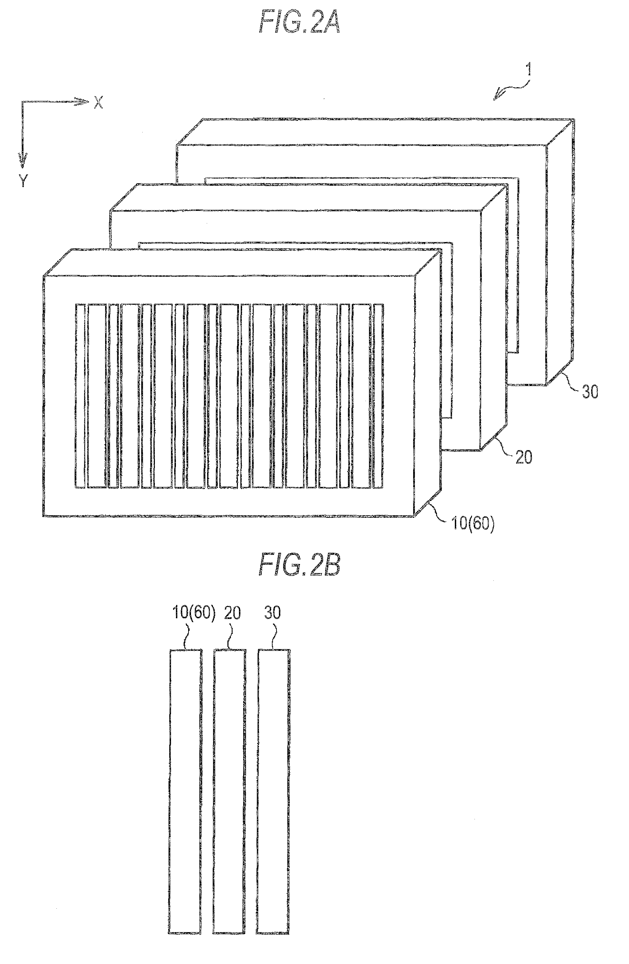

Figs. 2A and 2B show a configuration example of main parts of the 3D display device 1, in which Fig. 2A shows an exploded perspective view of the 3D display device 1, and Fig. 2B shows a side view of the 3D display device 1. As shown in Figs. 2A and 2B, in the 3D display device 1, these respective parts are disposed in the order of the backlight 30, the display unit 20, and the liquid crystal barrier 10. That is, light emitted from the backlight 30 reaches a viewer through the display unit 20 and the liquid crystal barrier 10.

### (Interpolation Processor 46)

The interpolation processor 46 performs a time-series interpolation process on each of six viewpoint video images composed of frame images E (E1 to E6) , included in the video signal Sdisp to thereby generate the video signal Sdisp2 including frame images F (F1 to F6). Hereinafter, this interpolation process will be described.

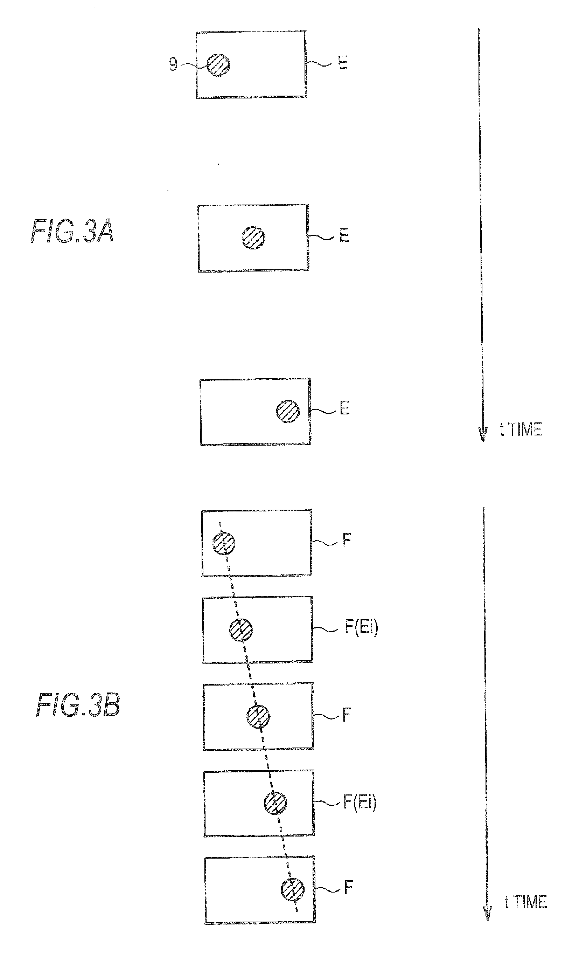

Figs. 3A and 3B schematically show the interpolation process in the interpolation processor 46, in which Fig. 3A shows video images before the interpolation process, and Fig. 3B shows video images after the interpolation process. In the interpolation processor 46, the interpolated image generator 48 generates an interpolated frame image Ei based on pixel information of frame images E adjacent in time and inserts the interpolated frame image Ei between the frame images E, whereby a series of frame images F are generated. With this interpolation process, for example, in the case of a video image wherein a ball 9 moves from left to right of a frame, as shown in Fig. 3A, the ball 9 moves from left to right more smoothly as shown in Fig. 3B.

In this way, the interpolation processor 46 generates the interpolated frame image Ei based on the frame images E adjacent in time with respect to each of the six viewpoint video images and generates six smoother viewpoint video images composed of a series of frame images F (frame images E and interpolated frame images Ei). Moreover, the interpolation processor 46 supplies the video signal Sdisp2 including the six viewpoint video images generated through the interpolation process to the combination processor 47.

### (Display Driver 50 and Display Unit 20)

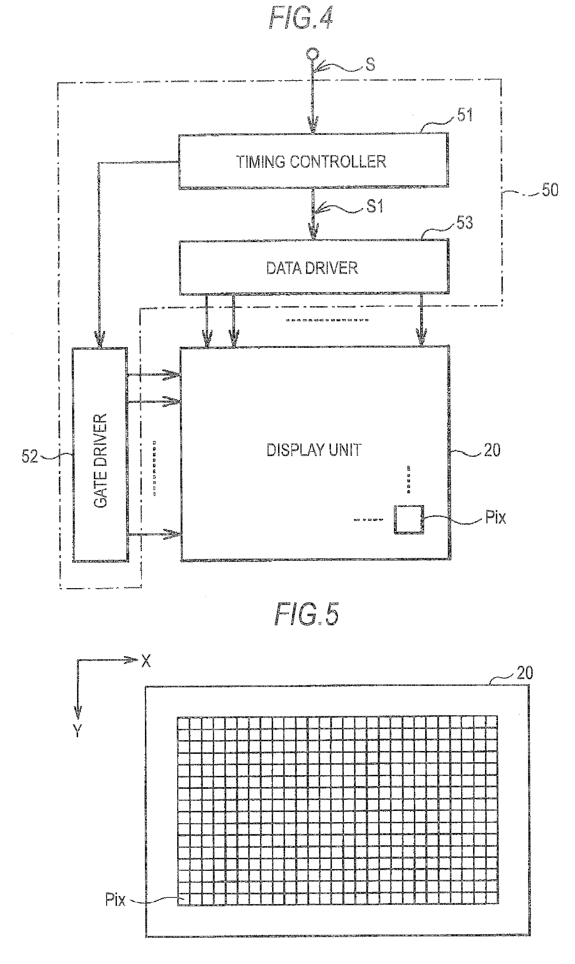

Fig. 4 shows an example of the block diagram of the display driver 50 and the display unit 20. Fig. 5 shows a configuration example of the display unit 20.

As shown in Fig. 4, the display driver 50 includes a timing controller 51, a gate driver 52, and a data driver 53. The timing controller 51 controls the driving timing of the gate driver 52 and the data driver 53 and supplies the video signal S supplied from the controller 40 to the data driver 53 as a video signal S1. The gate driver 52 sequentially selects the pixels Pix within the display unit 20 in units of rows in accordance with the timing control by the timing controller 51 to thereby perform line-sequential scanning. The data driver 53 supplies a pixel signal based on the video signal S1 to the respective pixels Pix of the display unit 20. Specifically, the data driver 53 performs digital/analog (D/A) conversion based on the video signal S1 to generate an analog pixel signal and supplies the pixel signal to the respective pixels Pix.

The display unit 20 has a configuration in which a liquid crystal material is enclosed between two transparent substrates formed of glass, for example. Transparent electrodes formed of indium tin oxides (ITO), for example, are formed on portions of these transparent substrates contacting the liquid crystal material, whereby pixels Pix are formed by the liquid crystal material and the transparent electrodes. As shown in Fig. 5, the pixels Pix are disposed in a matrix form in the display unit 20.

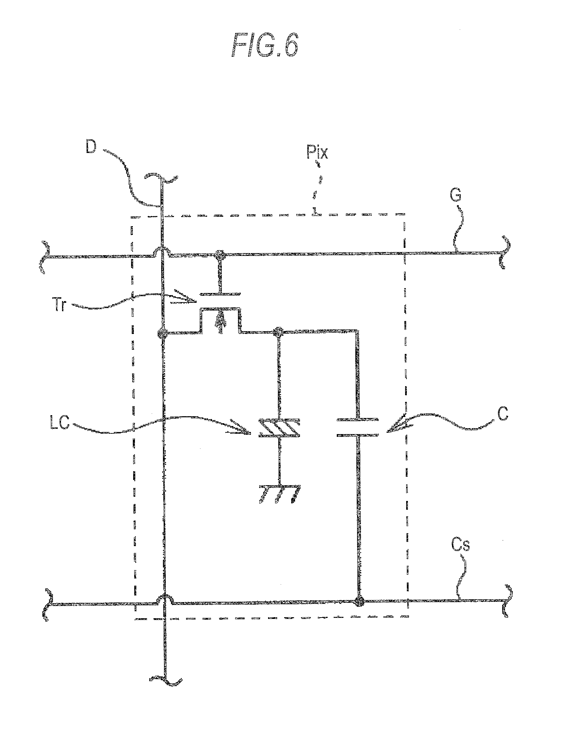

Fig. 6 shows an example of a circuit diagram of the pixel Pix. The pixel Pix includes a thin film transistor (TFT) element Tr, a liquid crystal element LC, and a storage capacitor element C. The TFT element Tr is formed of a metal oxide semiconductor-field effect transistor (MOS-FET), for example, and has a gate connected to a gate line G, a source connected to a data line D, and a drain connected to one end of the liquid crystal element LC and one end of the storage capacitor element C. The liquid crystal element LC has one end connected to the drain of the TFT element Tr and the other end grounded. The storage capacitor element C has one end connected to the drain of the TFT element Tr and the other end connected to a storage capacitor line Cs. The gate line G is connected to the gate driver 52, and the data line D is connected to the data driver 53.

With this configuration, the light emitted from the backlight 30 becomes linearly polarized light of which the direction is determined by a polarizing plate (not shown) disposed on the incidence side of the display unit 20, and the polarized light enters the liquid crystal element LC. In the liquid crystal element LC, the orientation of liquid crystal molecules changes in a certain response time in accordance with the pixel signal supplied through the data line D. The polarization direction of the light entering such a liquid crystal element LC changes. Moreover, light having passed through the liquid crystal element LC enters a polarizing plate (not shown) disposed on the output side of the display unit 20, and only light of a specific polarization direction can pass through the polarizing plate. In this way, the intensity of light is modulated in the liquid crystal element LC.

### (Liquid Crystal Barrier 10)

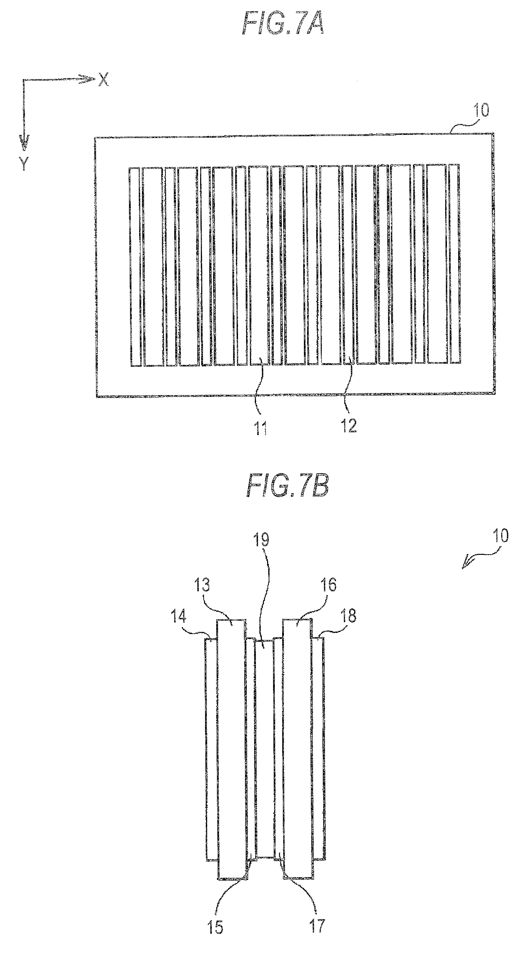

Figs. 7A and 7B show a configuration example of the liquid crystal barrier 10, in which Fig. 7A shows a plan view of the liquid crystal barrier 10, and Fig. 7B shows a side view. In this example, it is assumed that the liquid crystal barrier 10 performs a normally black operation. That is, the liquid crystal barrier 10 blocks light when it is not driven.

As shown in Fig. 7A, the liquid crystal barrier 10 includes a plurality of gates 11 and 12 that transmit or block light. The gates 11 and 12 are alternately arranged in the x-axis direction and extend in the y-axis direction (sequential scanning direction). The gates 11 and 12 perform different operations depending on whether the 3D display device 1 performs normal display (2D display) or 3D display. Specifically, as will be described later, the gate 11 is open (transmission state) when the 3D display device 1 performs normal display and is closed (blocking state) when the 3D display device 1 performs 3D display. As will be described later, the gate 12 is open (transmission state) when the 3D display device 1 performs normal display and performs an opening/closing (gating) operation in a time-divided manner when the 3D display device 1 performs 3D display.

As shown in Fig. 7B, the liquid crystal barrier 10 includes a transparent substrate 13, a transparent substrate 16 facing the transparent substrate 13, and a liquid crystal layer 19 inserted between the transparent substrates 13 and 16. The transparent substrates 13 and 16 are formed of glass, for example. A plurality of transparent electrodes 15 and 17 formed of ITO, for example, are formed on each of the surfaces of the transparent substrates 13 and 16 facing the liquid crystal layer 19. The transparent electrodes 15 and 17 formed on the transparent substrates 13 and 16, respectively, are disposed at the corresponding positions, whereby the gates 11 and 12 are formed by the liquid crystal layer 19 and the transparent electrodes 15 and 17. Polarizing plates 14 and 18 are formed on each of the surfaces of the transparent substrates 13 and 16 opposite the liquid crystal layer 19, respectively. In addition, although not shown in Fig. 7B, the display unit 20 and the backlight 30 are disposed on the right side (the right side of the polarizing plate 18) of the liquid crystal barrier 10 in the order shown in Fig. 2B.

The gating operation of the gates 11 and 12 of the liquid crystal barrier 10 is similar to the display operation of the display unit 20. That is, light which has been emitted from the backlight 30 and passed through the display unit 20 becomes linearly polarized light of which the direction is determined by the polarizing plate 18, and the polarized light enters the liquid crystal layer 19. In the liquid crystal layer 19, the orientation of liquid crystal molecules changes in a certain response time in accordance with a potential difference supplied to the transparent electrodes 15 and 17. The polarization direction of the light entering such a liquid crystal layer 19 changes. Moreover, light having passed through the liquid crystal layer 19 enters the polarizing plate 14, and only light of a specific polarization direction can pass through the polarizing plate 14. In this way, the intensity of light is modulated in the liquid crystal layer 19.

With this configuration, when a voltage is applied to the transparent electrodes 15 and 17 and a potential difference thereof increases, the transmittance of light in the liquid crystal layer 19 increases, and the gates 11 and 12 enter into the transmission state. On the other hand, when the potential difference between the transparent electrodes 15 and 17 decreases, the transmittance of light in the liquid crystal layer 19 decreases, and the gates 11 and 12 enter into the blocking state.

In this example, although the liquid crystal barrier 10 has been described to perform a normally black operation, the present disclosure is not limited to this, and instead of this, the liquid crystal barrier 10 may perform a normally white operation, for example. In this case, the gates 11 and 12 enter into the blocking state when the potential difference between the transparent electrodes 15 and 17 increases, whereas the gates 11 and 12 enter into the transmission state when the potential difference between the transparent electrodes 15 and 17 decreases. In addition, whether the liquid crystal barrier 10 will perform the normally black operation or the normally white operation can be determined by the polarizing plate and the liquid crystal orientation, for example.

The plurality of gates 12 form groups, and a plurality of gates 12 belonging to the same group perform the opening and closing operation at the same time when the 3D display is performed. Hereinafter, the groups of gates 12 will be described.

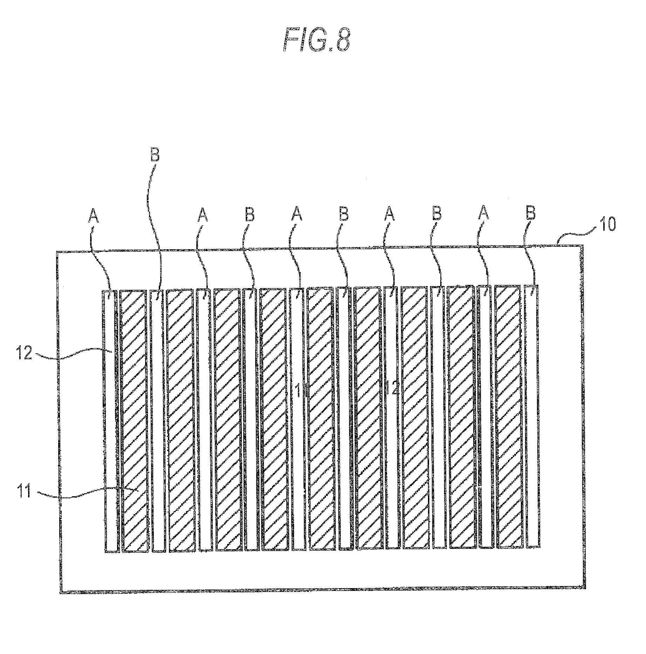

Fig. 8 shows a group configuration example of the gates 12. In this example, the gates 12 form two groups. Specifically, a plurality of gates 12 disposed alternately form groups A and B. In the following description, the gates 12 belonging to the group A will be appropriately referred to as gates 12A, and the gates 12 belonging to the group B will be appropriately referred to as gates 12B.

The barrier driver 41 drives the plurality of gates 12 belonging to the same group so as to perform the gating operation at the same time when the 3D display is performed. Specifically, as will be described later, the barrier driver 41 drives the gates 12 so that the plurality of gates 12A and 12B each belonging to the groups A and B, respectively, alternately perform the gating operation in a time-divided manner. As above, for the plurality of gates 12 belonging to the same group to operate at the same time, the barrier driver 41 may apply a driving signal simultaneously to the transparent electrodes 15 and 17 of the plurality of gates 12 belonging to the same group. Moreover, the driving signal may be applied simultaneously by connecting the transparent electrodes 15 and 17 of the plurality of gates 12 belonging to the same group.

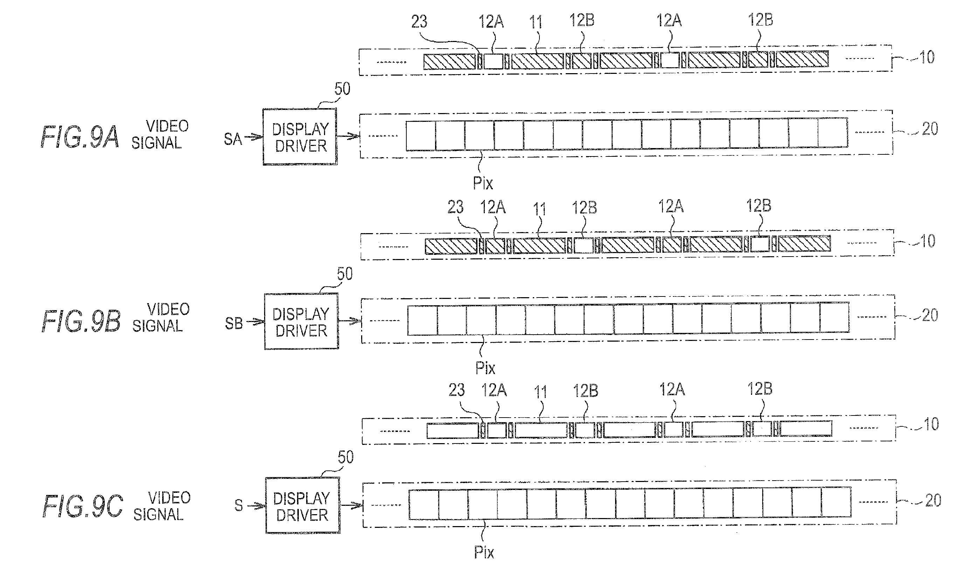

Figs. 9A to 9C schematically show the state in cross-sectional structure view, of the liquid crystal barrier 10 when performing the 3D display and the normal display (2D display), in which Fig. 9A shows one state when performing the 3D display. Fig. 9B shows the other state when performing the 3D display, and Fig. 9C shows the state when performing the normal display. In the liquid crystal barrier 10, the gates 11 and the gates 12 (the gates 12A and 12B) are alternately disposed. In this example, the gates 12A are provided in the proportion of 1 to 6 pixels Pix of the display unit 20. Similarly, the gates 12B are provided in the proportion of 1 to 6 pixels Pix of the display unit 20. In the following description, although it is assumed that the pixels Pix are pixels each composed of three subpixels (RGB), the present disclosure is not limited to this, and for example, the pixels Pix may be subpixels. Moreover, in the liquid crystal barrier 10, light-blocked portions are depicted by hatched lines.

When performing the 3D display, the video signals SA and SB are alternately supplied to the display driver 50, and the display unit 20 performs display based on these signals. Moreover, in the liquid crystal barrier 10, the gates 12 (the gates 12A and 12B) perform the gating operation in a time-divided manner, and the gates 11 maintain the closed state (blocking state). Specifically, when the video signal SA is supplied, as shown in Fig. 9A, the gates 12A enter into the open state, and the gates 12B enter into the closed state. In the display unit 20, as will be described later, the six adjacent pixels Pix disposed at the positions corresponding to the gates 12A perform display corresponding to the six viewpoint video images included in the video signal SA. In this way, viewers recognize the displayed video images as stereo video images when their left and right eyes see different viewpoint video images. Similarly, when the video signal SB is supplied, as shown in Fig. 9B, the gates 12B enter into the open state, and the gates 12A enter into the closed state. In the display unit 20, as will be described later, the six adjacent pixels Pix disposed at the positions corresponding to the gates 12B perform display corresponding to the six viewpoint video images included in the video signal SB. In this way, viewers recognize the displayed video images as stereo video images when their left and right eyes see different viewpoint video images. As such, the 3D display device 1 displays video images by alternately opening the gates 12A and 12B, whereby the resolution of the display device can be increased, as will be described later.

When performing the normal display (2D display), in the liquid crystal barrier 10, as shown in Fig. 9C, the gates 11 and the gates 12 (the gates 12A and 12B) maintain the open state (transmission state) . In this way, the viewers can see the normal 2D video images displayed on the display unit 20 based on the video signal S.

As shown in Figs. 9A to 9C, a gate interface 23 is provided between the gate 11 and the gate 12. In the gate interface 23, the transparent electrodes 15 and 17 are not formed on the transparent substrates 13 and 16. That is, the gate interfaces 23 do not perform the gating operation unlike the gates 11 and 12, and in the liquid crystal barrier 10 performing the normally black operation, they are always in the closed state (blocking state). On the other hand, in the liquid crystal barrier 10 performing the normally white operation, they are always in the open state (transmission state). Since the gate interfaces 23 are sufficiently smaller than the gates 11 and 12, they are barely noticed by the viewers. In the subsequent drawings and description, description of the gate interfaces 23 will be appropriately omitted.

Here, the gates 12 correspond to a specific example of a "gate" according to the embodiment of the present disclosure. The groups A and B correspond to a specific example of a "gate group" according to the embodiment of the present disclosure. The liquid crystal barrier 10 corresponds to a specific example of an "optical barrier unit" according to the embodiment of the present disclosure. The combined frame images FA and FB correspond to a specific example of a "combined image" according to the embodiment of the present disclosure.

### [Operation and Action]

Next, the operation and action of the 3D display device 1 according to the present embodiment will be described.

### (Overview of Overall Operation)

First, with reference to Fig. 1, the overall operation of the 3D display device 1 when performing 3D display will be described. The interpolation processor 46 performs an interpolation process on respective viewpoint images (frame images E (E1 to E6)) included in the video signal Sdisp supplied from the outside to thereby generate the video signal Sdisp2 including frame images F (F1 to F6). The combination processor 47 performs a combination process on the respective viewpoint images (the frame images F (F1 to F6)) included in the video signal Sdisp2 to thereby generate the video signal Sdisp3 composed of the video signal SA including the combined frame image FA and the video signal SB including the combined frame image FB. The controller 40 supplies the video signals SA and SB to the display driver 50 and control signals to the backlight driver 42 and the barrier driver 41 based on the video signal Sdisp3 and controls these drivers so as to operate in a synchronized manner. The backlight driver 42 drives the backlight 30. The backlight 30 emits a field of light to the display unit 20. The display driver 50 drives the display unit 20 based on the video signals SA and SB supplied from the controller 40. The display unit 20 performs display by modulating the light emitted from the backlight 30. The barrier driver 41 drives the liquid crystal barrier 10. The gates 11 and 12 (12A and 12B) of the liquid crystal barrier 10 transmit or block the light which has been emitted from the backlight 30 and passed through the display unit 20.

### (Detailed Operation During 3D Display)

Next, the detailed operation when performing the 3D display will be described with reference to relevant drawings.

In the 3D display device 1, the interpolation processor 46 generates the frame images F (F1 to F6) through the interpolation process based on the frame images E (E1 to E6) of the video signal Sdisp, and the combination processor 47 generates the combined frame images FA and FB through the combination process based on the frame images F (F1 to F6) generated through the interpolation process. Hereinafter, the combination process by the combination processor 47 will be described.

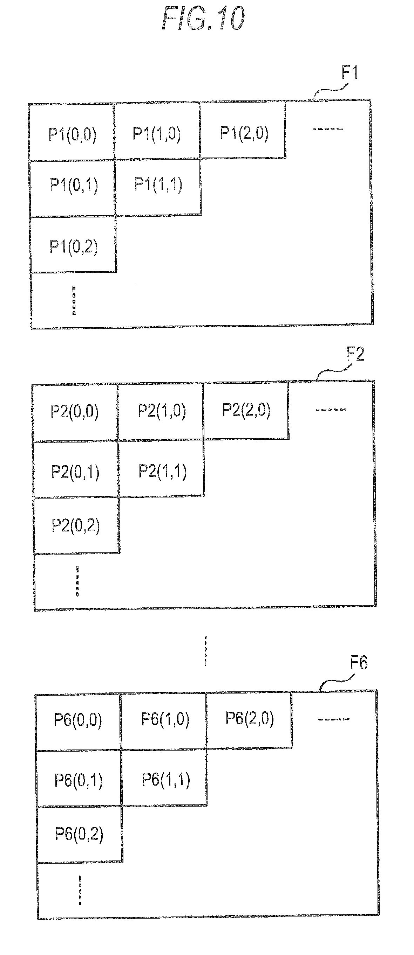

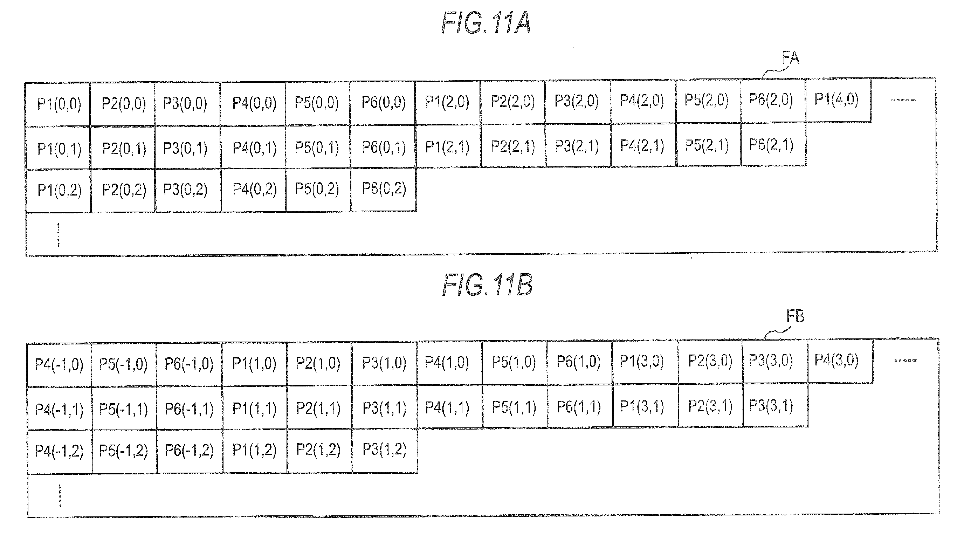

Fig. 10 shows a pixel arrangement of the frame images F1 to F6 of the six viewpoint video images supplied from the interpolation processor 46. Fig. 11A shows a pixel arrangement of the combined frame image FA that constitutes the video signal SA, and Fig. 11B shows a pixel arrangement of the combined frame image FB that constitutes the video signal SB. The combination processor 47 performs the combination process on the frame images F1 to F6 (see Fig. 10) of the six viewpoint video images included in the input video signal Sdisp2 to generate the combined frame images FA and FB (see Figs. 11A and 11B) alternately to thereby generate the video signals SA and SB. That is, the combination processor 47 generates the combined frame image FA based on the frame images F1 to F6 supplied at a certain timing from the interpolation processor 46 and generates the combined frame image FB based on the frame images F1 to F6 supplied at the next timing.

As shown in Fig. 10, the frame images F1 to F6 are composed of pixel information P1 to P6, respectively. Specifically, for example, the frame image F1 is composed of a plurality of pieces of pixel information P1 (P1(0,0), ..., P1(m,n), ...) (where m and n are integers) disposed in a matrix form, and the frame image F2 is composed of a plurality of pixel information P2 (P2(0,0), ..., P2 (m, n), ... .).

The combination processor 47 generates the combined frame image FA based on the pixel information (for example, P1(0,n), P1(2,n), and the like) on the even columns of the frame images F1 to F6 (see Fig. 11A). When arranging these pieces of pixel information in the combined frame image FA, the combination processor 47 arranges the pixel information so as to circulate between the frame images F1 to F6 in the horizontal direction. Specifically, as shown in Fig. 11A, the combination processor 47 arranges the 0th (even-column) pixel information of the frame images F1 to F6 in the combined frame image FA in the order of P1(0,n), P2(0,n), ..., and P6(0,n) from left to right of the combined frame image FA, and subsequently, arranges the 2nd (even-column) pixel information in the order of P1(2,n), P2(2,n), ..., P6(2,n).

Similarly, the combination processor 47 generates the combined frame image FB based on the pixel information (for example, P1(1,n), P1(3,n), and the like) on the odd column of the frame image F1 to F6 (see Fig. 11B). When arranging these pieces of pixel information in the combined frame image FB, the combination processor 47 arranges the pixel information so as to circulate between the frame images F1 to F6 in the horizontal direction. In this case, the combination processor 47 arranges three columns of dummy pixel information in the combined frame image FB. Specifically, as shown in Fig. 11B, the combination processor 47 arranges dummy pixel information P4 (-1,n), P5 (-1,n), and P6(-1,n) in the combined frame image FB from left to right of the combined frame image FB, and then arranges the 1st (odd-column) pixel information of the frame images F1 to F6 in the order of P1(1,n), P2(1,n), ..., and P6(1,n), and subsequently, arranges the 3rd (odd-column) pixel information in the order of P1(3,n), P2(3,n), ..., P6(3,n). That is, the arrangement of the pixel information P1 to P6 in the combined frame image FA and the arrangement of the pixel information P1 to P6 in the combined frame image FA are shifted from each other. In addition, the information of black, for example, can be used as the dummy pixel information. Moreover, for example, the dummy pixel information may be generated through interpolation or the like based on the pixel information of neighboring pixels.

The combination processor 47 supplies the video signals SA and SB including the combined frame images FA and FB, respectively, generated in this way to the controller 40. Moreover, the controller 40 supplies the video signals SA and SB to the display driver 50 and supplies the barrier control signal CBR synchronized with the video signals SA and SB to the barrier driver 41. In this way, the display unit 20 and the liquid crystal barrier 10 operate in a synchronized manner. The operation example thereof will be described below.

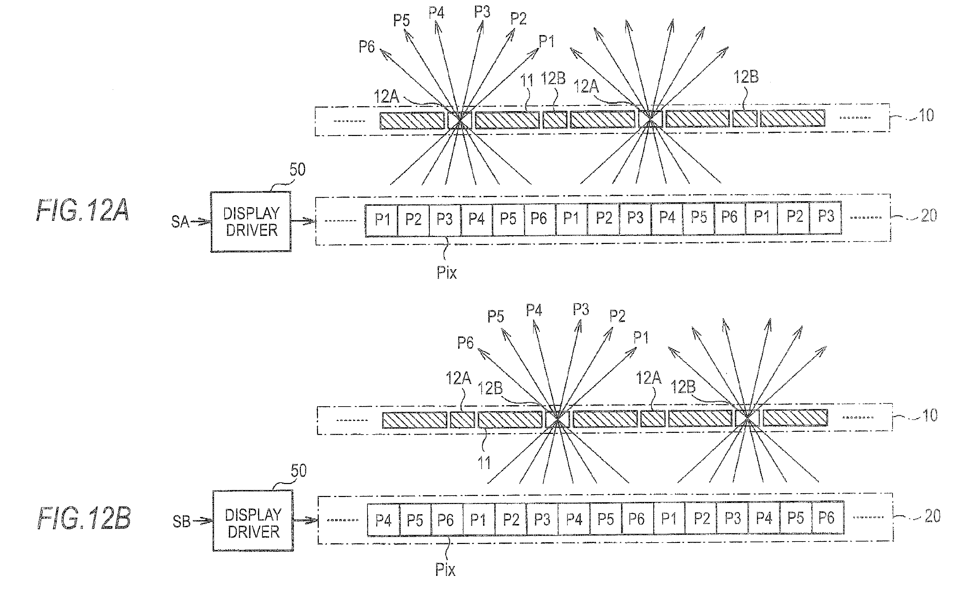

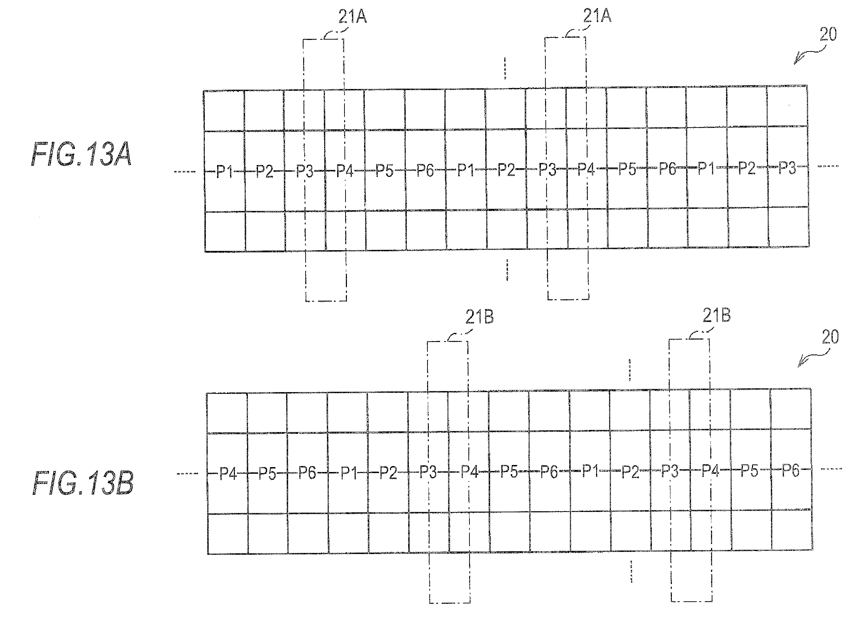

Figs. 12A and 12B show the operation example of the display unit 20 and the liquid crystal barrier 10, in which Fig. 12A shows the operation when the video signal SA is supplied, and Fig. 12B shows the operation when the video signal SB is supplied. Figs. 13A and 13B show the display operation example of the display unit 20 as viewed from the backlight 30, in which Fig. 13A shows the operation when the video signal SA is supplied, and Fig. 13B shows the operation when the video signal SB is supplied.

When the video signal SA is supplied, as shown in Figs. 12A and 13A, each of the pixels Pix of the display unit 20 displays the pixel information P1 to P6 corresponding to the six viewpoint video images included in the video signal SA. In this case, each of the pixel information P1 to P6 is displayed in the pixels Pix disposed near the gates 12A (barrier open regions 21A). When the video signal SA is supplied, in the liquid crystal barrier 10, the gates 12A enter into the open state (transmission state), and the gates 12B enter into the closed state. Light beams coming from the respective pixels Pix of the display unit 20 are output with the output angle restricted by the gates 12A. Viewers can see stereo video images by viewing the pixel information P3 with the left eye and the pixel information P4 with the right eye.

When the video signal SB is supplied, as shown in Figs. 12B and 13B, each of the pixels Pix of the display unit 20 displays the pixel information P1 to P6 corresponding to each of the six viewpoint video images included in the video signal SB. In this case, each of the pixel information P1 to P6 is displayed in the pixels Pix disposed near the gates 12B (barrier open regions 21B). That is, as described above, when generating the combined frame images FA and FB (the video signals SA and SB), since the combination processor 47 arranges the pixel information P1 to P6 so as to be shifted between the combined frame images FA and FB, each of the pixel information P1 to P6 is displayed at the positions corresponding to the gates 12A and 12B disposed to be shifted from each other. When the video signal SB is supplied, in the liquid crystal barrier 10, the gates 12B enter into the open state (transmission state), and the gates 12A enter into the closed state. Light beams coming from the respective pixels Pix of the display unit 20 are output with the output angle restricted by the gates 12B. Viewers can see stereo video images by viewing the pixel information P3 with the left eye and the pixel information P4 with the right eye.

As such, since the viewers see different pixel information within the pixel information P1 to P6 with the left and right eyes, they can recognize the displayed images as stereo video images. Moreover, since video images are displayed by alternately opening the gates 12A and 12B in a time-divided manner, the video images displayed at shifted positions are averaged and seen by the viewers. Thus, the 3D display device 1 can realize a resolution twice that of a display device having only the gates 12A. In other words, the resolution of the 3D display device 1 becomes 1/3 (=1/6×2) of the 2D display.

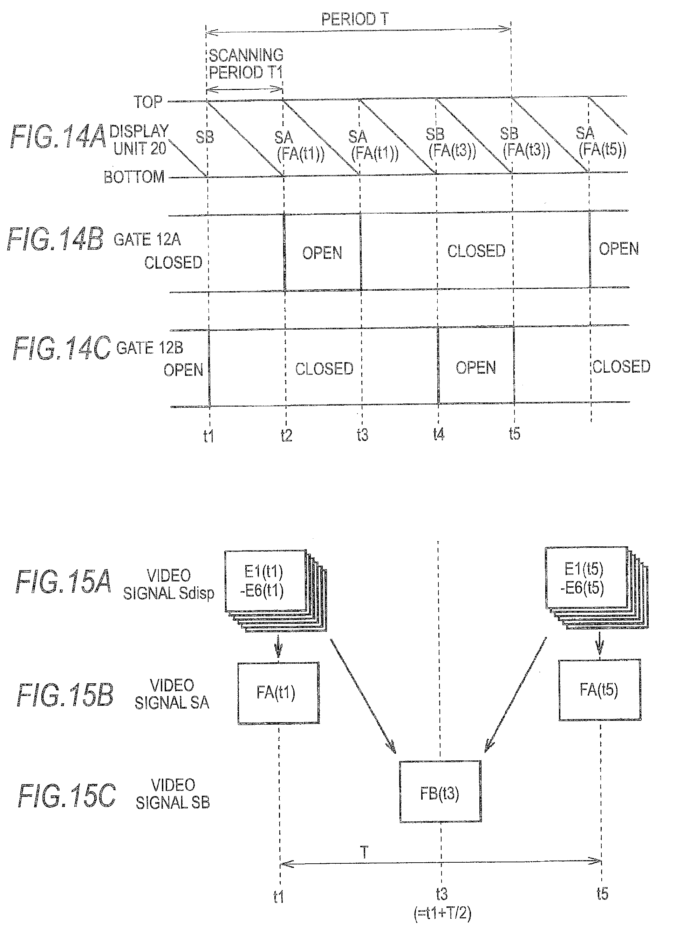

Next, the operation of the 3D display device 1 will be described in detail with reference to Figs. 14A to 14C and Figs. 15A to 15C.

Figs. 14A to 14C show the timing diagrams of the display operation of the 3D display device 1, in which Fig. 14A shows the operation of the display unit 20, Fig. 14B shows the operation of the gates 12A of the liquid crystal barrier 10, and Fig. 14C shows the operation of the gates 12B of the liquid crystal barrier 10.

Figs. 15A to 15C show a generation example of the video signals SA and SB in the combined image generator 45, in which Fig. 15A shows the video signal Sdisp, Fig. 15B shows the video signal SA, and Fig. 15C shows the video signal SB.

The vertical axis of Fig. 14A represents the position of the display unit 20 in the line-sequential scanning direction (y-axis direction). That is, Fig. 14A shows the operation state of the display unit 20 at a certain y-axis position at a certain point in time. In Fig. 14A, "SA" indicates the state where the display unit 20 performs display based on the video signal SA, and "SB" indicates the state where the display unit 20 performs display based on the video signal SB. Moreover, in Figs. 14B and 14C, "OPEN" indicates that the gates 12 (12A and 12B) are in the open state, and "CLOSED" indicates that the gates 12 are in the closed state.

In Fig. 15A, for example, a frame image E1(t1) represents a frame image E1 associated with time t1, and a frame image E6(t5) represents a frame image E6 associated with time t5. Moreover, in Figs. 15B and 15C, FA(t1) represents a combined frame image FA associated with time t1, and FB(t3) represents a combined frame image FB associated with time t3.

The 3D display device 1 performs display (display based on the video signal SA) of the gates 12A and display (display based on the video signal SB) of the gates 12B in a time-divided manner by line-sequential scanning performed every scanning period of T1. Moreover, these display operations are repeated every period of T. Here, the period T can be 16.7 [ms] (one cycle period of 60 [Hz]), for example. In this case, the scanning period T1 is 4.2 [ms] (1/4 of the period T).

The 3D display device 1 performs display based on the video signal SA in the period of t1 to t3.

First, as shown in Figs. 15A to 15C, the combined image generator 45 generates the combined frame image FA(t1) of the video signal SA associated with time t1 based on the video signal Sdisp. Specifically, the interpolation processor 46 supplies the frame images E1(t1) to E6(t1) included in the video signal Sdisp to the combination processor 47 as frame images F1(t1) to F6(t1) (not shown). Moreover, the combination processor 47 generates the combined frame image FA(t1) that constitutes the video signal SA based on the frame images F1(t1) to F6(t1) supplied from the interpolation processor 46.

In the period of t1 to t2, the display unit 20 performs line-sequential scanning in the direction from top to bottom based on the driving signal supplied from the display driver 50 to thereby perform display based on the video signal SA (the combined frame image FA(t1)) (see Fig. 14A). In the liquid crystal barrier 10, the gates 12A and 12B maintain the closed state in the period of t1 to t2 (see Figs. 14B and 14C). In this way, since the viewers will not notice a transient change in the display unit 20 from the display based on the video signal SB to the display based on the video signal SA, it is possible to reduce deterioration of image quality.

In the period of t2 to t3, the display unit 20 performs line-sequential scanning in the direction from top to bottom based on the driving signal supplied from the display driver 50 to thereby perform the display based on the video signal SA (the combined frame image FA(t1)) again (see Fig. 14A). That is, in this example, the display operation based on the combined frame image FA(t1) is repeated twice in the period of t1 to t3. In the liquid crystal barrier 10, at time t2, the gates 12A enter into the open state based on the driving signal from the barrier driver 41. In this way, the viewers can see the display based on the video signal SA by the display unit 20 in the period of t2 to t3.

Subsequently, the 3D display device 1 performs display based on the video signal SB in the period of t3 to t5.

First, as shown in Figs. 15A to 15C, the combined image generator 45 generates a combined frame image FB(t3) of the video signal SB associated with time t3 based on the video signal Sdisp. Specifically, the interpolated image generator 48 of the interpolation processor 46 generates frame images F1(t3) to F6(t3) (not shown) through an interpolation process based on the frame images E1(t1) to E6(t1) and the frame images E1(t5) to E6 (t5) included in the video signal Sdisp. Moreover, the combination processor 47 generates a combined frame image FB(t3) that constitutes the video signal SB based on the frame images F1(t3) to F6(t3) supplied from the interpolation processor 46.

In the period of t3 to t4, the display unit 20 performs line-sequential scanning in the direction from top to bottom based on the driving signal supplied from the display driver 50 to thereby perform display based on the video signal SB (the combined frame image FB(t3)) (see Fig. 14A). In the liquid crystal barrier 10, the gates 12A enter into the closed state based on the driving signal from the barrier driver 41 at time t3, and the gates 12A and 12B maintain the closed state in the period of t3 to t4 (see Figs. 14B and 14C). In this way, since the viewers will not notice a transient change in the display unit 20 from the display based on the video signal SA to the display based on the video signal SB, it is possible to reduce deterioration of image quality.

In the period of t4 to t5, the display unit 20 performs line-sequential scanning in the direction from top to bottom based on the driving signal supplied from the display driver 50 to thereby perform the display based on the video signal SB (the combined frame image FB(t3)) again (see Fig. 14A). That is, in this example, the display operation based on the combined frame image FB (t3) is repeated twice in the period of t3 to t5. In the liquid crystal barrier 10, at time t4, the gates 12B enter into the open state based on the driving signal from the barrier driver 41. In this way, the viewers can see the display based on the video signal SB by the display unit 20 in the period of t4 to t5.

By repeating the above operations, the 3D display device 1 generates the combined frame images FA and FB based on the video signal Sdisp and repeatedly and alternately performs the display (the display of the gates 12A) based on the video signal SA (the combined frame image FA) and the display (the display of the gates 12B) based on the video signal SB (the combined frame image FB).

As such, by alternately displaying the combined frame images FA and FB alternately generated based on the video signal Sdisp at shifted positions (the gates 12A and 12B), it is possible to obtain the same effects as so-called interlaced display and to obtain smoother video images.

### [Effects]

As described above, in the present embodiment, since the combined frame images FA and FB associated with different timings, generated through the interpolation process are alternately displayed at shifted positions, it is possible to display smoother video images and to increase image quality.

### [Modified Example 1]

In the above embodiment, although the backlight has been described to be always turned on, the present disclosure is not limited to this, and instead of this, the backlight may be repeatedly turned on and off every predetermined period, for example. This can be applied, for example, when the gates 12 (12A and 12B) of the liquid crystal barrier 10 perform the gating operation over a response period corresponding to the response speed of liquid crystals. The details thereof will be described below.

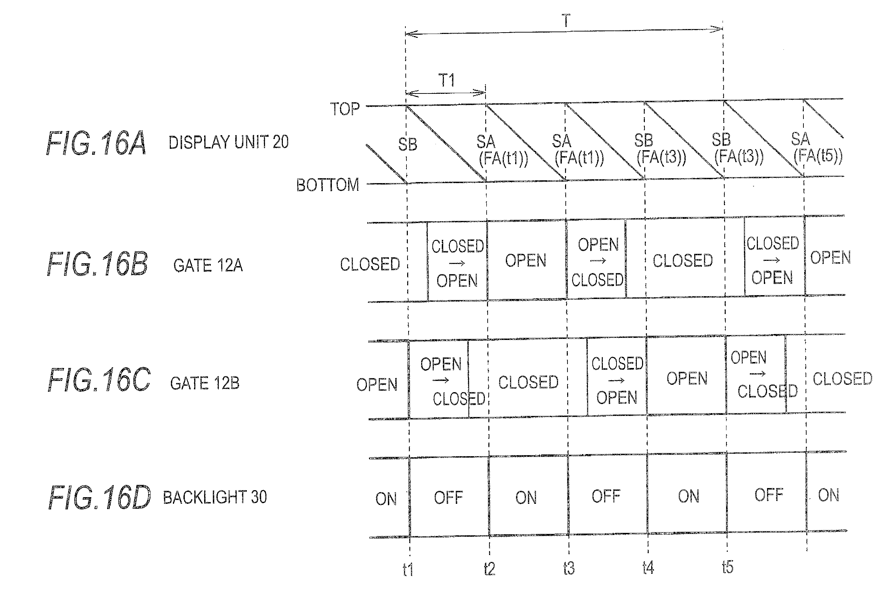

Figs. 16A to 16D show the timing diagrams of the display operation of a 3D display device according to the present modified example, in which Fig. 16A shows the operation of the display unit 20, Fig. 16B shows the operation of the gates 12A of the liquid crystal barrier 10, Fig. 16C shows the operation of the gates 12B of the liquid crystal barrier 10, and Fig. 16D shows the operation of the backlight 30. In Figs. 16B and 16C, "OPEN→CLOSED" indicates the state where the gates 12 (12A and 12B) change from the open state to the closed state, and "CLOSED→OPEN" indicates the state where the gates 12 change from the closed state to the open state. "OPEN→CLOSED" and "CLOSED→OPEN" correspond to the response of liquid crystal molecules of the gates 12 of the liquid crystal barrier 10. The backlight 30 is turned on in the period when the gates 12 are in the open state and is turned off in other periods. In this way, since the viewers will be unable to see the display when the gates 12 transiently change in the manner of "OPEN→CLOSED" and "CLOSED→OPEN", it is possible to reduce deterioration of image quality.

### [Other Modified Example]

In the above embodiment, although the video signal SA (the combined frame image FA) was directly generated from the video signal Sdisp, and the video signal SB (the combined frame image FB) was generated through the interpolation process, the present disclosure is not limited to this. Instead of this, for example, the video signal SB may be generated directly from the video signal Sdisp, and the video signal SA may be generated through the interpolation process, and both the video signals SA and SB may be generated through the interpolation process.

Moreover, in the above embodiment, although the frame image F was generated by performing the interpolation process on the frame image E, and then, the combined frame images FA and FB were generated through the combination process, the present disclosure is not limited to this. Instead of this, for example, the interpolation process may be performed after the combination process is performed, and the interpolation process and the combination process may be performed at the same time.

Moreover, in the above embodiment, although the display unit 20 has been described to perform the display operation (line-sequential scanning) twice based on the same combined frame images, the present disclosure is not limited to this, and instead of this, the second line-sequential scanning may not be performed, for example. Specifically, for example, in Figs. 14A to 14C, when performing display based on the video signal SA in the period of t1 to t3, the line-sequential scanning may be performed in the period of t1 to t2, and then, the scanning may be stopped in the period of t2 to t3. Moreover, when performing display based on the video signal SB in the period of t3 to t5, the line-sequential scanning may be performed in the period of t3 to t4, and then, the scanning may be stopped in the period of t4 to t5.

### <2. Second Embodiment>

In the present embodiment, the gates 12 of the liquid crystal barrier 10 in the first embodiment are divided in the line-sequential scanning direction (the y-axis direction), and accompanied by this, the method of the interpolation process in the interpolation processor is changed. That is, in the present embodiment, a 3D display device 2 is configured such that a liquid crystal barrier 60 in which the gates 12 are divided is used instead of the liquid crystal barrier 10 of the first embodiment (see Fig. 1 and the like), and a combined image generator 65 that performs a different interpolation process from the combined image generator 45 is used instead of the combined image generator 45. In addition, constituent elements having substantially the same configurations as those of the 3D display device 1 according to the first embodiment will be denoted by the same reference numerals, and description thereof will be appropriately omitted.

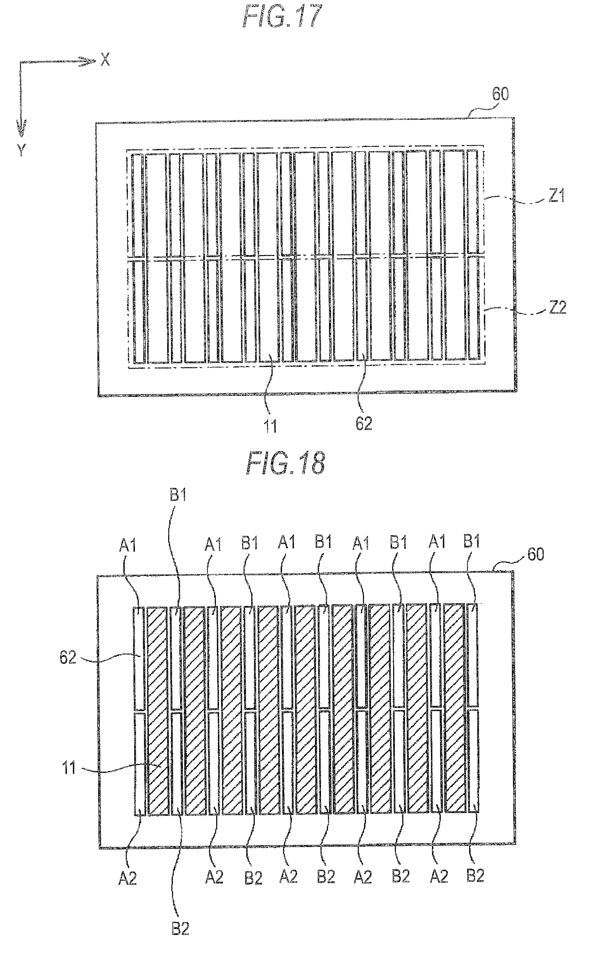

Fig. 17 shows a configuration example of the liquid crystal barrier 60. The liquid crystal barrier 60 includes gates 62. The gates 62 correspond to the gates 12 of the liquid crystal barrier 10 according to the first embodiment. In the liquid crystal barrier 60, zones Z1 and Z2 are set so as to be arranged in the y-axis direction (line-sequential scanning direction), and the gates 62 and the gates 11 are alternately arranged in the x-axis direction in each zone.

In the liquid crystal barrier 60, the gates 62 disposed in the zone Z1 and the gates 62 disposed in the zone Z2 are configured to operate independently. The barrier driver 41 drives these gates 62 independently so that when 3D display is performed, the gates 62 in the zone Z1 and the gates 62 in the zone Z2 perform the gating operation at different timings.

Fig. 18 shows a group configuration example of the gates 62. In this example, the gates 62 form two groups in each of the zones Z1 and Z2. Specifically, in zone Z1, a plurality of gates 62 disposed alternately form groups A1 and B1. Similarly, in zone Z2, a plurality of gates 62 disposed alternately form groups A2 and B2.

The barrier driver 41 drives the plurality of gates 62 belonging to the same group so as to perform the gating operation at the same time when the 3D display is performed. Specifically, in zone Z1, the barrier driver 41 drives the gates 62 so that the plurality of gates 62 each belonging to the groups A1 and B1, respectively, alternately perform the gating operation in a time-divided manner. Similarly, in zone Z2, the barrier driver 41 drives the gates 62 so that the plurality of gates 62 each belonging to the groups A2 and B2, respectively, alternately perform the gating operation in a time-divided manner.

In the following description, the gates 62 belonging to the groups A1 and A2 will be appropriately referred to as gates 62A, and the gates 62 belonging to the groups B1 and B2 will be appropriately referred to as gates 62B.

Here, the groups A1, A2, B1, and B2 correspond to a specific example of a "gate group" according to the embodiment of the present disclosure. Zones Z1 and Z2 correspond to a specific example of a "sub-barrier region" according to the embodiment of the present disclosure.

In the 3D display device 2, since the gates 62 in zones Z1 and Z2 of the liquid crystal barrier 60 perform the gating operation independently, display is performed based on different combined frame images in the regions of the display unit 20 corresponding to zones Z1 and Z2 of the liquid crystal barrier 60.

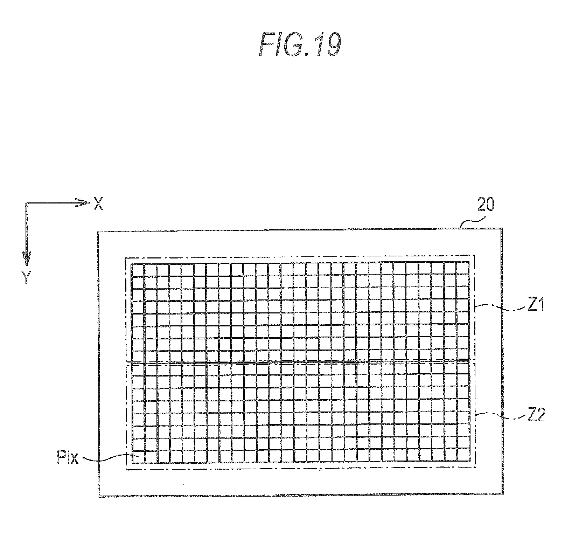

Fig. 19 shows zones Z1 and Z2 in the display unit 20. Zones Z1 and Z2, are provided on the liquid crystal barrier 60 at positions corresponding to zones Z1 and Z2. Thus, the light emitted from the backlight 30 enters zone Z1 of the liquid crystal barrier 60 through zone Z1 of the display unit 20 and enters zone Z2 of the liquid crystal barrier 60 through zone Z2 of the display unit 20.

As shown in Fig. 1, the combined image generator 65 includes an interpolation processor 66 including an interpolated image generator 68. As will be described later, the interpolated image generator 68 generates three interpolated frame images Ei of different time based on frame images E adjacent in time in each of six viewpoint video images.

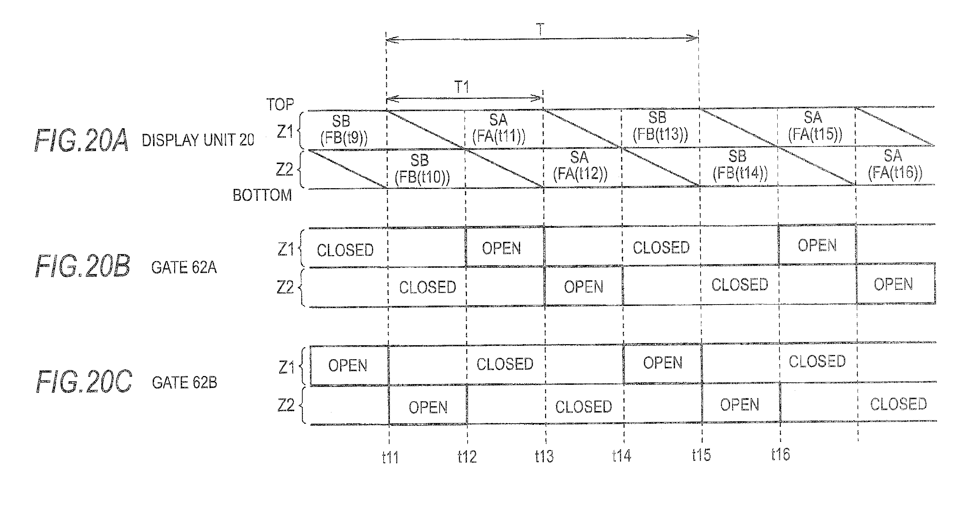

Figs. 20A to 20C show the timing diagrams of the display operation of the 3D display device 2, in which Fig. 20A shows the operation of the display unit 20, Fig. 20B shows the operation of the gates 62A of the liquid crystal barrier 60, and Fig. 20C shows the operation of the gates 62B of the liquid crystal barrier 60.

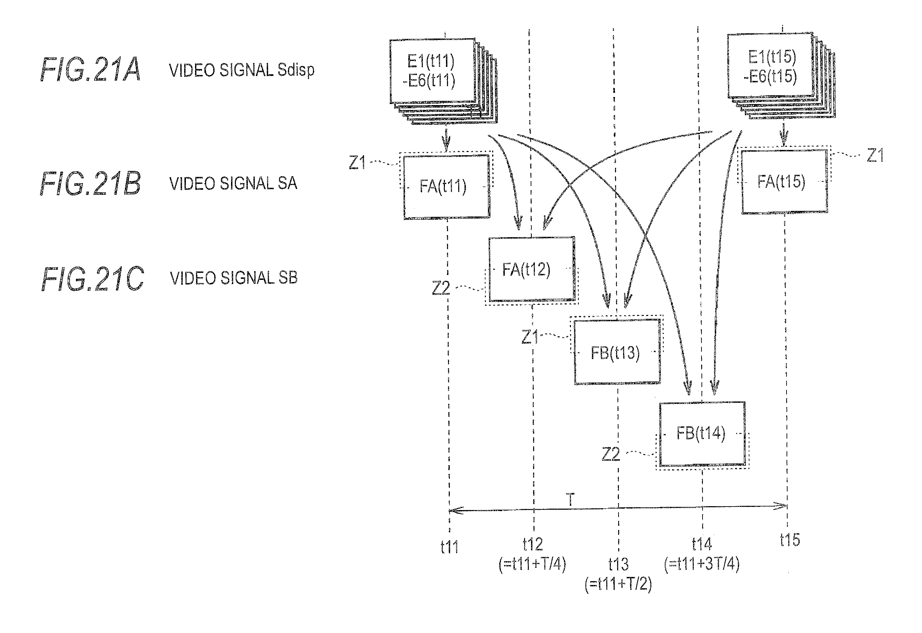

Figs. 21A to 21C show a generation example of the video signals SA and SB in the combined image generator 65, in which Fig. 21A shows the video signal Sdisp, Fig. 21B shows the video signal SA, and Fig. 21C shows the video signal SB.

In Figs. 20A to 20C, the operation of the display unit 20 and the gates 62A and 62B is shown for each of the zones Z1 and Z2. That is, in Fig. 20A, "SA" shown in the portion of zone Z1 indicates the state where the display unit 20 performs display in zone Z1 based on the video signal SA, and "SA" shown in the portion of zone Z2 indicates the state where the display unit 20 performs display in zone Z2 based on the video signal SA. Similarly, "SB" shown in the portion of zone Z1 indicates the state where the display unit 20 performs display in zone Z1 based on the video signal SB, and "SB" shown in the portion of zone Z2 indicates the state where the display unit 20 performs display in zone Z2 based on the video signal SB. Moreover, in Fig. 20B, "OPEN" and "CLOSED" shown in the portion of zone Z1 indicate the operation of the gates 62A (the gates 62 belonging to the group A1) in zone Z1, and "OPEN" and "CLOSED" shown in the portion of zone Z2 indicate the operation of the gates 62A (the gates 62 belonging to the group A2) in zone Z2. Similarly, in Fig. 20C, "OPEN" and "CLOSED" shown in the portion of zone Z1 indicate the operation of the gates 62B (the gates 62 belonging to the group B1) in zone Z1, and "OPEN" and "CLOSED" shown in the portion of zone Z2 indicate the operation of the gates 62B (the gates 62 belonging to the group B2) in zone Z2.

The 3D display device 2 performs display based on the video signal SA in the period of t11 to t13.

First, as shown in Figs. 21A to 21C, the combined image generator 65 generates a combined frame image FA(t11) of the video signal SA associated with time t11 based on the video signal Sdisp. Specifically, the interpolation processor 66 supplies frame images E1(t11) to E6(t11) included in the video signal Sdisp to the combination processor 47 as frame images F1(t11) to F6(t11). Moreover, the combination processor 47 generates a combined frame image FA(t11) that constitutes the video signal SA based on the frame images F1(t11) to F6(t11) supplied from the interpolation processor 66.

Moreover, as shown in Figs. 21A to 21C, the combined image generator 65 generates a combined frame image FA(t12) of the video signal SA associated with time t12 based on the video signal Sdisp. Specifically, the interpolated image generator 68 of the interpolation processor 66 generates frame images F1(t12) to F6(t12) (not shown) through the interpolation process based on the frame images E1(t11) to E6(t11) and the frame images E1(t15) to E6(t15) included in the video signal Sdisp. Moreover, the combination processor 47 generates a combined frame image FA(t12) that constitutes the video signal SA based on the frame images F1(t12) to F6(t12) supplied from the interpolation processor 66.

In the period of t11 to t13, as shown in Figs. 20A to 20C, the display unit 20 performs line-sequential scanning based on the video signal SA, whereby the combined frame image FA(t11) is displayed in zone Z1, and the combined frame image FA(t12) is displayed in zone Z2 (see Fig. 20A). That is, the upper half portion (the portion corresponding to zone Z1) of the combined frame image FA(t11) is displayed in zone Z1 of the display unit 20, and the lower half portion (the portion corresponding to zone Z2) of the combined frame image FA(t12) is displayed in zone Z2. Moreover, in the liquid crystal barrier 60, the gates 62A in zone Z1 enter into the open state in the period of t12 to t13, and the gates 62A in zone Z2 enter into the open state in the period of t13 to t14 (see Fig. 20B). In this way, in the period of t12 to t14, the viewers can see the display based on the video signal SA by the display unit 20.

Subsequently, in the period of t13 to t15, the 3D display device 2 performs display based on the video signal SB.

First, as shown in Figs. 21A to 21C, the combined image generator 65 generates a combined frame image FB(t13) of the video signal SB associated with time t13 based on the video signal Sdisp. Specifically, the interpolated image generator 68 of the interpolation processor 66 generates frame images F1(t13) to F6(t13) (not shown) through the interpolation process, and the combination processor 47 generates a combined frame image FB(t13) that constitutes the video signal SB based on these frame images.

Moreover, the combined image generator 65 generates a combined frame image FB(t14) of the video signal SB associated with time t14 based on the video signal Sdisp. Specifically, the interpolated image generator 68 of the interpolation processor 66 generates frame images F1(t14) to F6(t14) (not shown) through the interpolation process, and the combination processor 47 generates a combined frame image FB(t14) that constitutes the video signal SB based on these frame images.

In the period of t13 to t15, as shown in Figs. 20A to 20C, the display unit 20 performs line-sequential scanning based on the video signal SB, whereby the combined frame image FB(t13) is displayed in zone Z1, and the combined frame image FB(t14) is displayed in zone Z2 (see Fig. 20A). That is, the upper half portion (the portion corresponding to zone Z1) of the combined frame image FB(t13) is displayed in zone Z1 of the display unit 20, and the lower half portion (the portion corresponding to zone Z2) of the combined frame image FB(t14) is displayed in zone Z2. Moreover, in the liquid crystal barrier 60, the gates 62B in zone Z1 enter into the open state in the period of t14 to t15, and the gates 62B in zone Z2 enter into the open state in the period of t15 to t16 (see Fig. 20C). In this way, in the period of t14 to t16, the viewers can see the display based on the video signal SB of the display unit 20.

By repeating the above operations, the 3D display device 2 generates the combined frame images FA and FB through the interpolation process based on the video signal Sdisp and repeatedly and alternately performs the display (the display of the gates 62A) based on the video signal SA (the combined frame image FA) and the display (the display of the gates 62B) based on the video signal SB (the combined frame image FB).

As described above, in the present embodiment, since display is performed in zones Z1 and Z2 of the display unit 20 based on the different combined frame images FA and FB generated through the interpolation process, it is possible to display smoother video images and to increase image quality. The other effects are the same as those of the first embodiment.

### [Modified Example 2-1]

In the above embodiment, although the combined image generator 65 has generated the combined frame images FA and FB in units of whole pieces, the present disclosure is not limited to this. Instead of this, for example, only necessary portions (upper or lower half portions) of the combined frame images FA and FB may be generated. For example, in Figs. 21A to 21C, the combined image generator 65 may generate only the upper half portion of the combined frame image FA(t11) at time t11, generate only the lower half portion of the combined frame image FA(t12) at time t12, generate only the upper half portion of the combined frame image FB(t13) at time t13, and generate only the lower half portion of the combined frame image FB(t14) at time t14.

### [Modified Example 2-2]

In the above embodiment, although the backlight has been described to be always turned on, the present disclosure is not limited to this, and instead of this, the backlight may be repeatedly turned on and off every predetermined period, for example, similarly to the first embodiment and the modified example 1. An example in which the response time of the gates 62 (62A and 62B) of the liquid crystal barrier 60 is taken into consideration will be described below.

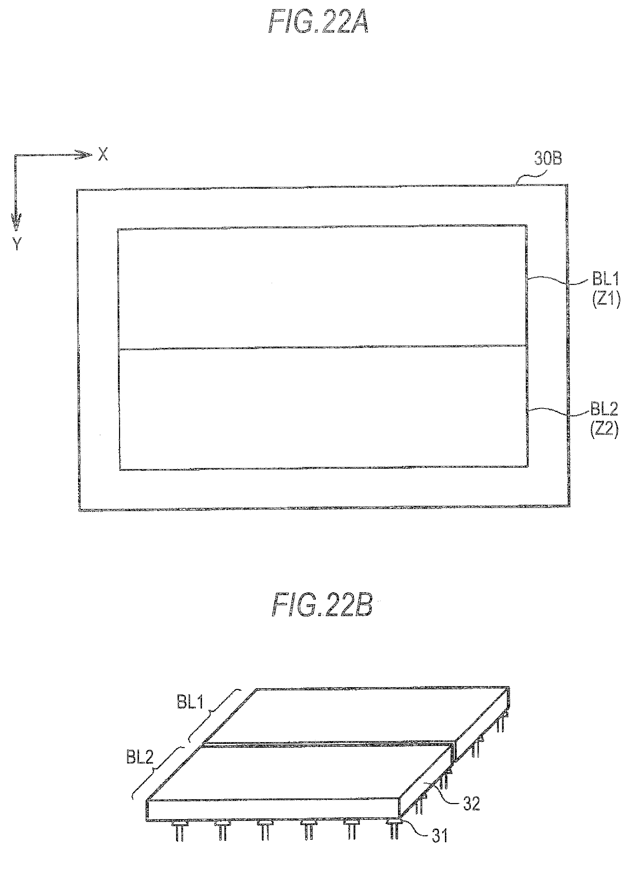

Figs. 22A and 22B show a configuration example of a backlight 30B according to the present modified example, in which Fig. 22A shows a plan view of the backlight 30B, and Fig. 22B shows a perspective view of main parts of the backlight 30B. As shown in Fig. 22A, the backlight 30B includes two light-emitting portions BL1 and BL2 capable of emitting light independently. As shown in Fig. 22B, the light-emitting portions BL1 and BL2 each include light sources 31 and a light guide plate 32. In this example, the light sources 31 are formed of LEDs. The light guide plate 32 diffuses the light emitted from the light sources 31 so that the light-emitting portions BL1 and BL2 emit a uniform field of light. The light-emitting portions BL1 and BL2 are provided on the display unit 20 and the liquid crystal barrier 60 at positions corresponding to zones Z1 and Z2.

Since the light-emitting portions BL1 and BL2 are configured to emit light independently, in the backlight 30B, light may not be transmitted between the light-emitting portions BL1 and BL2. Specifically, first, the light emitted from one light source 31 enters only the light guide plate 32 corresponding to the light source 31. Moreover, the light entering the light guide plate 32 is totally reflected from the side surfaces of the light guide plate 32, whereby no light is transmitted to the adjacent light guide plate 32 through the side surfaces. Specifically, this total reflection can be realized by adjusting the positions of the light sources 31 or forming an optical reflection surface on the side surfaces of the light guide plate 32. In this example, although the light sources 31 were formed of LEDs, the present disclosure is not limited to this, and instead of this, the light sources 31 may be formed of CCFL, for example.

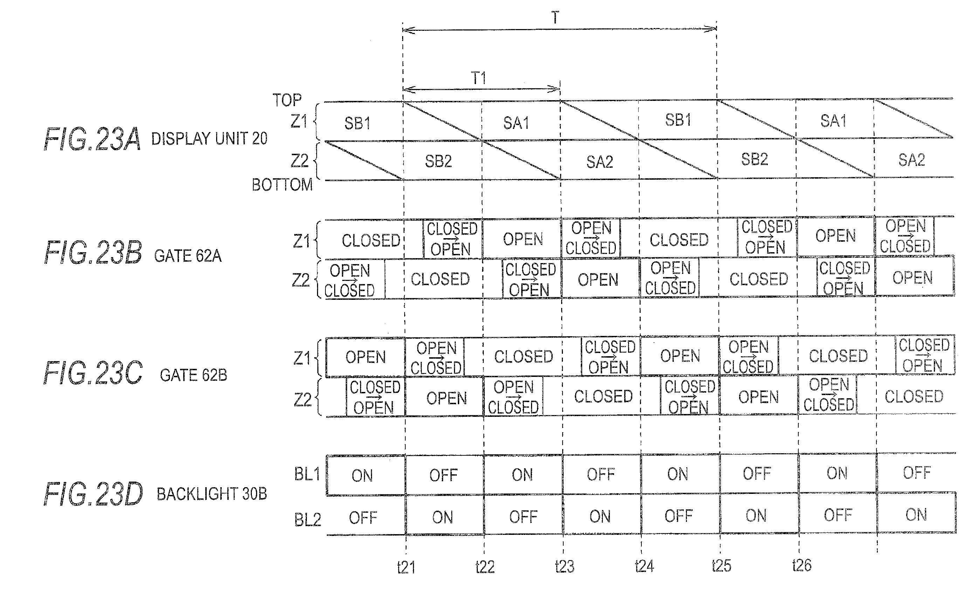

Figs. 23A to 23D show the timing diagrams of the display operation of a 3D display device according to the present modified example, in which Fig. 23A shows the operation of the display unit 20, Fig. 23B shows the operation of the gates 62A of the liquid crystal barrier 60, Fig. 23C shows the operation of the gates 62B of the liquid crystal barrier 60, and Fig. 23D shows the operation of the backlight 30B. In Fig. 23B, "OPEN", "OPEN→CLOSED" "CLOSED", and "CLOSED→OPEN" shown in the portions of zones Z1 and Z2 indicate the operation of the gates 62A in zones Z1 and Z2. Similarly, in Fig. 23C, "OPEN", "OPEN→CLOSED", "CLOSED", and "CLOSED→OPEN" shown in the portions of zones Z1 and Z2 indicate the operation of the gates 62B in zones Z1 and Z2. The light-emitting portion BL1 of the backlight 30B is turned on in the period when the gates 62 (62A and 62B) in zone Z1 of the liquid crystal barrier 60 are in the open state and is turned off in the other periods. Similarly, the light-emitting portion BL2 of the backlight 30B is turned on in the period when the gates 62 (62A and 62B) in zone Z2 of the liquid crystal barrier 60 are in the open state and is turned off in the other periods. In this way, since the viewers will be unable to see the display when the gates 62 transiently change like "OPEN→CLOSED" and "CLOSED→OPEN", it is possible to reduce deterioration of image quality.

### [Other Modified Example]

In the above embodiment, although the gates 12 of the liquid crystal barrier have been divided into two parts in the line-sequential scanning direction (the y-axis direction), the present disclosure is not limited to this, and instead of this, the gates 12 may be divided into three parts or more. In this case, for example, it is desirable that the number of zones in the display unit be changed in accordance with the number of divided parts, and the combined image generator 65 generate the combined frame images by performing the interpolation process for each of the zones.

While the present disclosure has been described by way of several embodiments and modified examples, the present disclosure is not limited to these embodiments and the like, and various changes can be made.

For example, in the embodiments and the like, although the display response time of the display unit 20 has been described to be short, the response time may be long. The details of this will be described below.

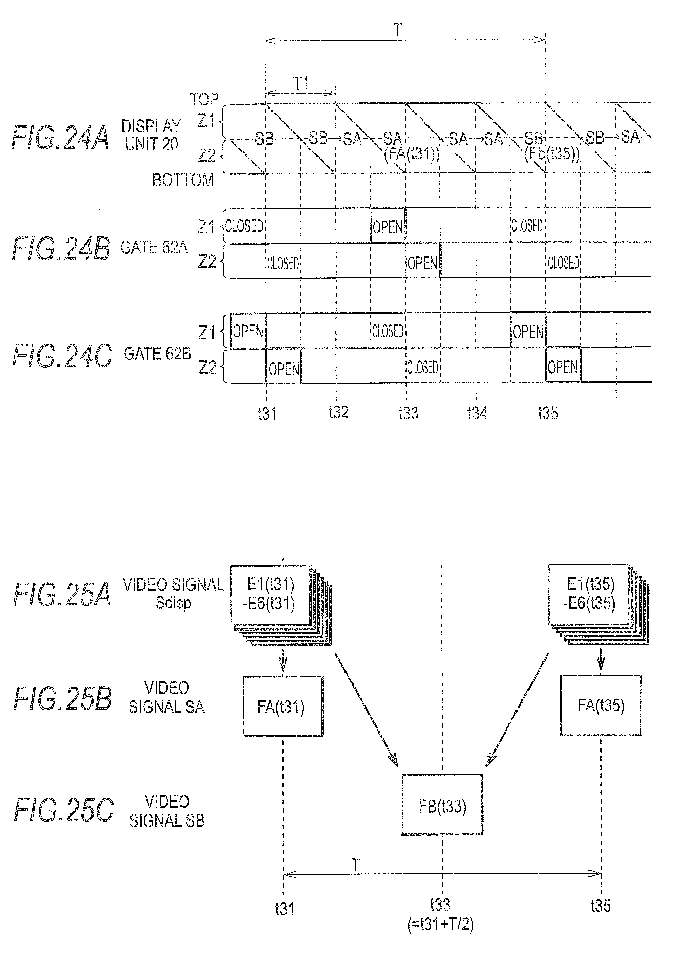

Figs. 24A to 24C show the timing diagrams of the display operation of a 3D display device according to the present modified example, in which Fig. 24A shows the operation of the display unit 20, Fig. 24B shows the operation of the gates 62A of the liquid crystal barrier 60, and Fig. 24C shows the operation of the gates 62B of the liquid crystal barrier 60.

Figs. 25A to 25C show a generation example of the video signals SA and SB in a combined image generator according to the present modified example, in which Fig. 25A shows the video signal Sdisp, Fig. 25B shows the video signal SA, and Fig. 25C shows the video signal SB.

In Fig. 24A, "SA→SB" indicates the state where the video signal SB is supplied to the display driver 50, and the display unit 20 changes from the display based on the video signal SA to the display based on the video signal SB. Similarly, "SB→SA" indicates the state where the video signal SA is supplied to the display driver 50, and the display unit 20 changes from the display based on the video signal SB to the display based on the video signal SA. "SA→SB" and "SB→SA" correspond to the response of liquid crystal molecules of the display unit 20.

As shown in Figs. 24A to 24C, the gates 62 enter into the open state in the period when the display based on the video signals SA and SB is fixed in zones Z1 and Z2 of the display unit 20. Specifically, the gates 62A in zone Z1 enter into the open state in the period when display based on the video signal SA is performed in zone Z1 of the display unit 20 (see Fig. 24B), and the gates 62A in zone Z2 enter into the open state in the period when display based on the video signal SA is performed in zone Z2 of the display unit 20 (see Fig. 24B). Similarly, the gates 62B in zone Z1 enter into the open state in the period when display based on the video signal SB is performed in zone Z1 of the display unit 20 (see Fig. 24C), and the gates 62B in zone Z2 enter into the open state in the period when display based on the video signal SB is performed in zone Z2 of the display unit 20 (see Fig. 24C). In this way, since the viewers will be unable to see the change in the display ("SB→SA" and "SA→SB") of the display unit 20, it is possible to reduce deterioration of image quality.

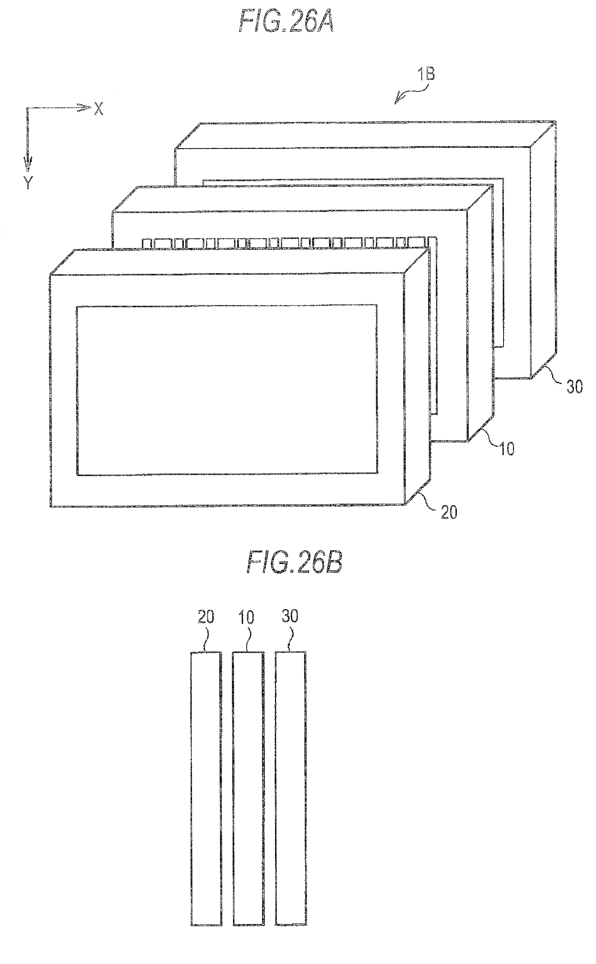

Moreover, for example, in the above embodiments and the like, although the backlight 30, the display unit 20, and the liquid crystal barrier 10 of the 3D display device have been described to be arranged in that order, the present disclosure is not limited to this. Instead of this, for example, as shown in Figs. 26A and 26B, they may be arranged in the order of the backlight 30, the liquid crystal barrier 10, and the display unit 20.

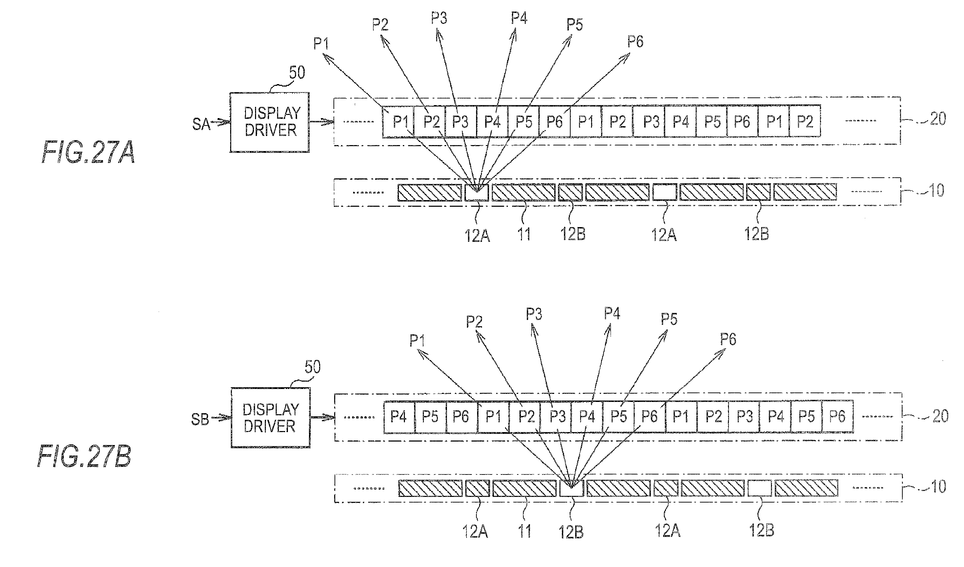

Figs. 27A and 27B show the operation example of the display unit 20 and the liquid crystal barrier 10 according to the present modified example, in which Fig. 27A shows the operation when the video signal SA is supplied, and Fig. 27B shows the operation when the video signal SB is supplied. In the present modified example, the light emitted from the backlight 30 first enters the liquid crystal barrier 10 (60). Moreover, light having passed through the gates 12A and 12B among the light components is modulated by the display unit 20, and six viewpoint video images are output.

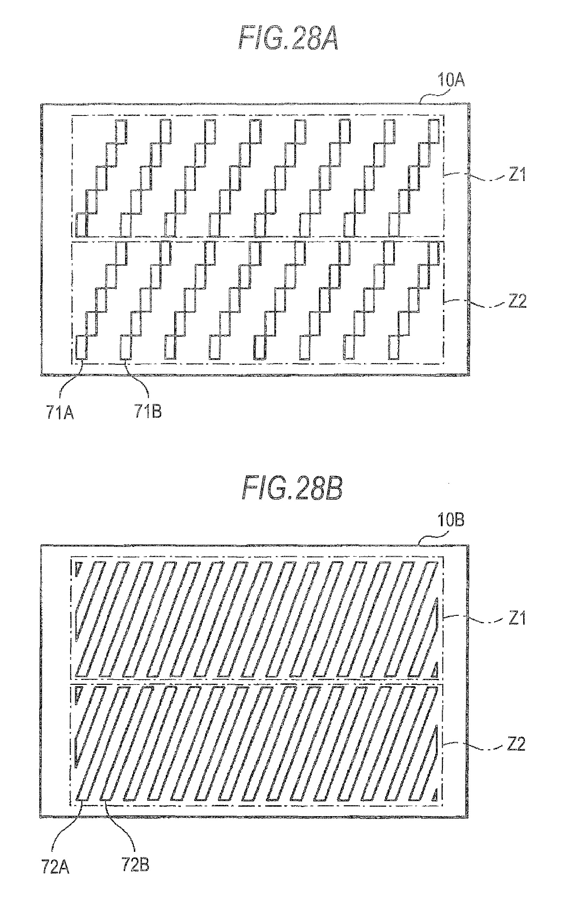

Moreover, for example, in the above embodiments and the like, although the gates of the liquid crystal barrier have been described to extend in the y-axis direction, the present disclosure is not limited to this. For example, in the second embodiment, a step barrier system shown in Fig. 28A and an oblique barrier system shown in Fig. 28B can be used. The step barrier system is disclosed in JP-A-2004-264762, for example. The oblique barrier system is disclosed in JP-A-2005-086506, for example. In addition, such barrier systems can be applied to the liquid crystal barrier 10 of the first embodiment by connecting the barriers in zones Z1 and Z2.

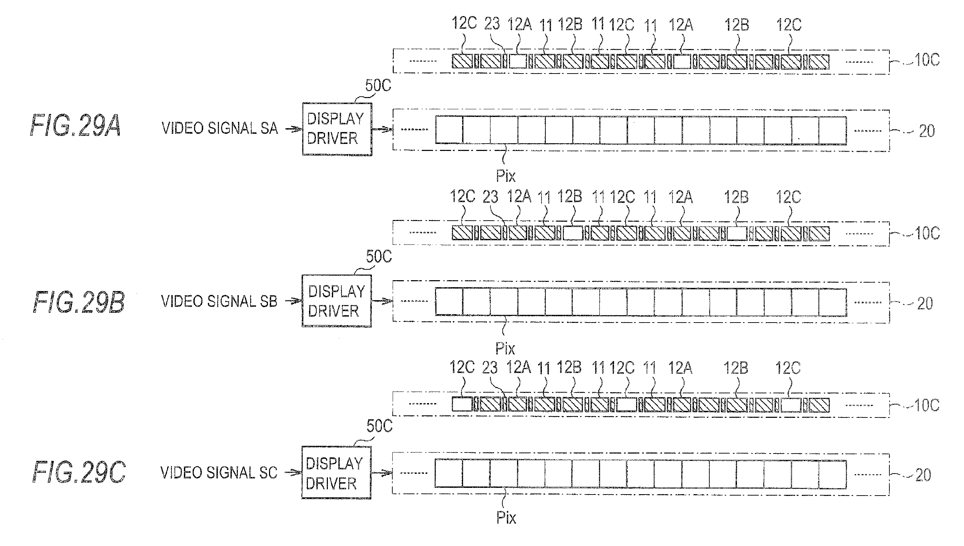

Moreover, for example, in the above embodiments and the like, although the gates 12 have formed two groups, the present disclosure is not limited to this, instead of this, the gates 12 may form three groups or more, for example. In this way, it is possible to further improve a display resolution. Figs. 29A to 29C show an example in which the gates 12 form three groups A, B, and C. Similarly to the above embodiments and the like, the gates 12A represent the gates 12 belonging to the group A, the gates 12B represent the gates 12 belonging to the group B, and the gates 12C represent the gates 12 belonging to the group C. By displaying video images by alternately opening the gates 12A, 12B, and 12C in a time-divided manner, the 3D display device according to the present modified example can realize a resolution three times that of a display device having only the gates 12A. In other words, the resolution of the 3D display device becomes 1/2 (=1/6×3) of the 2D display.

Furthermore, for example, in the above embodiments and the like, although the display unit 20 has been described to use liquid crystals, the present disclosure is not limited to this, and instead of this, the display unit 20 may use electro luminescence (EL) material, for example.

Furthermore, for example, in the above embodiments and the like, although the liquid crystal barrier 10 formed of liquid crystals has been used, the present disclosure is not limited to this, and a barrier formed of other materials may be used.

Furthermore, for example, in the above embodiments and the like, as shown in Figs. 14A to 14C and the like, although the liquid crystal barrier 10 has performed the gating operation in synchronization with the line-sequential scanning in the display unit 20, the present disclosure is not limited to this. Instead of this, the opening/closing timing may be changed without causing deterioration of image quality as viewed by viewers in such a way that the period of opening the gates may be increased or decreased.

Furthermore, for example, in the above embodiments and the like, although the video signals SA and SB include six viewpoint video images, the present disclosure is not limited to this, and the video signals SA and SB may include five viewpoint video images or less and may include seven viewpoint video images or more. In this case, the relationship between the gates 12A and 12B of the liquid crystal barrier 10 and the pixels Pix shown in Figs. 9A to 9C also changes. That is, for example, when the video signals SA and SB include five viewpoint video images, it is desirable that the gates 12A be provided in the proportion of 1 to 5 pixels Pix of the display unit 20. Similarly, it is desirable that the gates 12B be provided in the proportion of 1 to 5 pixels Pix of the display unit 20.

The present disclosure contains subject matter related to that disclosed in Japanese Priority Patent Application JP 2010-260074 filed in the Japan Patent Office on November 22, 2010, the entire content of which is hereby incorporated by reference.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alterations may occur depending on design requirements and other factors insofar as they are within the scope of the appended claims or the equivalents thereof.

## Claims

1. A display device comprising:
an optical barrier unit which includes a plurality of gate groups each including a plurality of gates, and in which gates in different groups perform a gating operation individually at different timings;
a combined image generator which generates a plurality of sequences of combined images each corresponding to the plurality of gate groups based on a plurality of different viewpoint images in accordance with an opening timing of the respective gate groups; and
a display unit which displays the corresponding sequence of combined images in synchronization with the gating operation of the respective gate groups,
wherein the combined image generator generates at least one sequence of combined images through interpolation.

2. The display device according to claim 1,
wherein the display unit performs display through line-sequential scanning, and
wherein the plurality of gates are provided so that each gate extends in the direction of the line-sequential scanning, and are arranged so that the respective gate groups appear in a circular manner in the direction crossing the line-sequential scanning direction.

3. The display device according to claim 2,
wherein the gates of the optical barrier unit perform the gating operation by switching in units of the gate groups in a time-divided manner, and
wherein the display unit displays corresponding combined images at positions corresponding to the gates which are in an open state.

4. The display device according to claim 1,
wherein the display unit performs display through line-sequential scanning,
wherein the optical barrier unit is divided into a plurality of sub-barrier regions in the direction of the line-sequential scanning and includes the plurality of gate groups in each of the sub-barrier regions, and
wherein the combined image generator generates the combined images in each of the regions corresponding to the sub-barrier regions in accordance with an opening timing of the respective gate groups.

5. The display device according to claim 1,
wherein a sequence of combined images among the plurality of sequences of combined images is generated by directly combining the plurality of viewpoint images.

6. The display device according to claim 1,
wherein the display unit is a liquid crystal display unit, and
wherein the display device further comprises a backlight.

7. The display device according to claim 6,
wherein the liquid crystal display unit is disposed between the backlight and the optical barrier unit.

8. The display device according to claim 6,
wherein the optical barrier unit is disposed between the backlight and the liquid crystal display unit.

9. A display method comprising:
causing a plurality of gates of an optical barrier to perform a gating operation by switching in units of gate groups in a time-divided manner;
generating a plurality of sequences of combined images each corresponding to the plurality of gate groups based on each of a plurality of different viewpoint images in accordance with an opening timing of the respective gate groups; and
displaying the corresponding sequence of combined images in synchronization with the gating operation of the respective gate groups.

10. A display device comprising:
an optical barrier unit which includes a plurality of gate groups each including a plurality of gates, and in which gates in different groups perform a gating operation individually at different timings; and
a display unit which displays a plurality of sequences of combined images each corresponding to the plurality of gate groups,
wherein at least one sequence of combined images among the plurality of sequences of combined images are generated through interpolation, and
wherein the optical barrier unit performs the gating operation in synchronization with the combined images.

11. A display device comprising:
a display unit which displays a plurality of images and an interpolated image generated based on the plurality of images; and
an optical barrier unit which includes first and second gate groups each including a plurality of gates,
wherein the first gate group and the second gate group perform a gating operation individually at different timings,
wherein the first gate group transmits the plurality of images, and
wherein the second gate group transmits the interpolated image.
